(19) Europäisches Patentamt
European Patent Office
Office européen des brevets

(11) EP 1 590 383 B1

(12) EUROPÄISCHE PATENTSCHRIFT

(45) Veröffentlichungstag und Bekanntmachung des Hinweises auf die Patenterteilung:
**08.04.2009 Patentblatt 2009/15**

(21) Anmeldenummer: **04700980.8**

(22) Anmeldetag: **09.01.2004**

(51) Int Cl.:
***C08F 220/00*** *(2006.01)*

(86) Internationale Anmeldenummer:
**PCT/EP2004/000093**

(87) Internationale Veröffentlichungsnummer:
**WO 2004/067661 (12.08.2004 Gazette 2004/33)**

# (54) HAFTKLEBEBÄNDER ZUR VERKLEBUNG VON DRUCKPLATTEN UND VERFAHREN ZU DEREN HERSTELLUNG

PRESSURE-SENSITIVE ADHESIVE TAPE FOR THE ADHESION OF PRINTING PLATES AND METHOD FOR THE PRODUCTION THEREOF

BANDES ADHESIVES DESTINEES AU COLLAGE DE PLAQUES DE COMPRESSION ET PROCEDE DE FABRICATION

(84) Benannte Vertragsstaaten:
**DE ES FR GB IT**

(30) Priorität: **29.01.2003 DE 10303538**
**01.04.2003 DE 10314898**

(43) Veröffentlichungstag der Anmeldung:
**02.11.2005 Patentblatt 2005/44**

(73) Patentinhaber: **tesa AG**
**20253 Hamburg (DE)**

(72) Erfinder:
- **HUSEMANN, Marc**
**22605 Hamburg (DE)**
- **RUNGE, Torsten**
**21075 Hamburg (DE)**
- **ZÖLLNER, Stephan**
**22043 Hamburg (DE)**

(74) Vertreter: **Stubbe, Andreas et al**
**tesa AG,**
**Kst. 9500 - Bf. 645,**
**Quickbornstrasse 24**
**20253 Hamburg (DE)**

(56) Entgegenhaltungen:
**EP-A- 0 655 490**
**EP-A- 1 188 802**
**EP-A- 1 270 698**
**EP-A- 1 302 521**
**WO-A-20/04050784**
**US-A- 5 708 109**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 590 383 B1

## Beschreibung

Die Erfindung betrifft die Verwendung einer Haftklebemasse nach dem Anspruch 1, wobei die Haftklebemasse ein sehr geringes Aufziehverhalten auf polaren Oberfläche besitzt, leicht repositionierbar ist und nach der Verklebung auf dem Druckzylinder ein geringes Kantenabheben der Druckplatte und des Verbundes aus Klischeeklebeband und Druckplatte aufweist.

In der Druckindustrie sind unterschiedliche Verfahren bekannt, um Motive mittels druckender Vorlagen auf beispielsweise Papier zu übertragen. Eine Möglichkeit besteht im sogenannten Flexodruck. Eine Ausführungsform des Flexodrucks stellt nun wiederum die Verwendung mehrschichtiger Photopolymer-Druckplatten mit flexiblem Unterbau dar, wobei diese Art des Druckens schon seit längerer Zeit zum Stand der Technik zählt. Die Druckplatten bestehen dabei aus mehreren Schichten unterschiedlichen polymeren Materials mit jeweils speziellen Aufgaben. Zum Beispiel weisen die Druckplatten "nyloflex MA" und "nyloflex ME" der Firma BASF AG drei Schichten auf, nämlich eine lichtempfindliche Reliefschicht, darunter eine Stabilisierungsfolie sowie als Basis eine elastische Trägerschicht.

Im Flexodruckverfahren werden flexible Druckplatten auf Druckzylinder verklebt. Zur Verklebung werden in der Regel doppelseitige Haftklebebänder eingesetzt, an die sehr hohe Anforderungen gestellt werden. Für den Druckprozess muss das Haftklebeband eine bestimmte Härte aber auch eine bestimmte Elastizität aufweisen. Diese Eigenschaften müssen sehr genau eingestellt werden, damit das erzeugte Druckbild gemäß den Anforderungen das gewünschte Ergebnis liefert. Weitere hohe Anforderungen werden an die Haftklebemasse gestellt, da hier die Klebkraft ebenfalls ausreichend sein sollte, damit sich die Druckplatte nicht von dem doppelseitigen Haftklebeband oder das Haftklebeband vom Zylinder ablöst. Dies gilt auch bei erhöhten Temperaturen von 40 - 60 °C und bei höheren Druckgeschwindigkeiten. Neben dieser Eigenschaft muss die Haftklebemasse aber auch reversible Hafteigenschaften besitzen, da häufig Druckplatten verklebt und dann zur Repositionierung wieder abgelöst werden müssen. Diese Ablösbarkeit sollte auch bei einer Verklebung über einen längeren Zeitraum (bis zu 6 Monate) gegeben sein. Zudem ist es erwünscht, dass das Haftklebeband und insbesondere die Druckplatte sich ohne Zerstörung dieser, d. h. ohne großen Kraftaufwand wieder entfernt werden kann. Zudem sollten keine Rückstande auf der Druckplatte und auf dem Zylinder verbleiben. Zusammenfassend werden somit sehr hohe Anforderungen an die für diesen Einsatz geeigneten doppelseitige Haftklebebänder gestellt.

In US 4,380,956 wird ein Prozess zur Fixierung einer Druckplatte für den Flexodruckprozess beschrieben. Für diesen Prozess werden auch Haftklebemassen eingesetzt, die aber nicht genauer spezifiziert wurden.

In GB 1,533,431 wird ein doppelseitiges Haftklebeband beansprucht, dass eine elastomere Schicht enthält, die wiederum durch fragile Luftblasen aufgeschäumt ist. Die Luftblasen werden unter Druck während der Flexodruckanwendung zerdrückt.

In US 4,574,697 werden doppelseitige Haftklebebänder beansprucht, die als Trägermaterial einen flexiblen Polyurethanschaum aufweisen, der auf einer PET-Folie (Polyethylenterephthalat) fixiert ist. Die äußeren Schichten bestehen aus Haftklebemassen.

Das beschriebene Haftklebeband soll reversibel sein und sich von dem Druckzylinder und von der Druckplatte entfernen lassen. Ein ähnlicher Produktaufbau wurde in EP 0 206 760 beschrieben. Hier wurde als flexibler Schaumträger ein Polyethylenschaum eingesetzt.

In US 4,574,712 wird in Analogie zu US 4,574,697 ein ähnlicher Haftklebebandaufbau beschrieben. Bezüglich der Haftklebemassen findet hier die Einschränkung statt, dass die Klebkraft zu der Druckplatte und zu dem Druckzylinder kleiner sein sollte als zu der Trägerfolie und dem Trägerschaum.

In US 3,983,287 wird ein Laminat beschrieben, das als Trägermaterial ein nichtkompressibles Elastomer enthält. Die Kompressibilität wird durch Kugeln erreicht, die unter Druck zerstört werden und somit eine Flexibilität erzeugen.

In US 5,613,942 werden Haftklebebänder beschrieben, die besonders geeignet für Verklebungen auf feuchten Oberflächen sind. Es wird auch erwähnt, dass solche Haftklebebänder zur Verklebung von Druckplatten geeignet sind.

In US 5,476,712 wird ebenfalls ein doppelseitiges Haftklebeband beschrieben, dass im Flexodruckverfahren eingesetzt wird. Dieses Haftklebeband enthält wiederum ein thermoplastisches Elastomer, wobei hier eine zellförmige Struktur vorliegt, die durch expandierende Mikropartikel erzeugt werden.

In den obengenannten Fällen werden sehr viele unterschiedliche Haftklebemassen eingesetzt. Naturkautschukklebemassen besitzen gute klebrige Eigenschaften, sind aber nicht sehr scherfest bei Raumtemperatur und altern durch den Abbau über die im Polymer enthaltenden Doppelbindungen.

SIS oder SEBS basierende Haftklebemassen sind in der Regel sehr weich und haftklebrig und neigen auch bei hohen Temperaturen zu erweichen. Verklebt man unter Spannung die Druckplatte auf dem Druckzylinder mit einer SIS- oder SEBS-haltigen Haftklebemasse, so neigt die Druckplatte zum Ablösen, obwohl die Klebkraft hoch ist.

Acrylathaftklebemassen sind dagegen sehr gut zur Verklebung von Druckplatten auf Druckzylindern geeignet, müssen aber im Herstellungsprozess nach der Beschichtung vernetzt werden. Weiterhin neigen diese Haftklebemassen - durch die Vielzahl der Estergruppen und der daraus resultierenden Polarität - zu einem hohen Aufziehverhalten.

Als Resultat lassen sich die Druckplatten nur mit sehr hohem Kraftaufwand entfernen. Zudem muss die Haftklebemasse

eine gewisse Härte aufweisen, damit die Druckplatten nach der Verklebung auf dem Druckzylinder über einen längeren Zeitraum nicht zum Kantenabheben neigen.

Die US 5 708 109 A offenbart mehrschichtige Klebebänder mit einem Klebstoff aus 25 bis 97 Teilen eines Alkylacrylats, wobei der Alkylrest aus 4 - 18 C-Atomen besteht und wobei das Polymer einen $T_g$-Wert unterhalb von 0 °C aufweist, 3 bis 75 Teilen eines nicht polaren ethylenisch ungesättigten Monomeren, dessen Polymer einen $T_g$-Wert oberhalb von 15 °C aufweist. Der Haftkleber kann vernetzt werden. Als weitere Bestandteile können Klebrigmacher, Farbstoffe usw. anwesend sein. Die Monomermischung wird durch Zugabe eines Radikalstarters polymerisiert.

In US 5,613,942 werden Haftklebebänder beschrieben, die besonders geeignet für Verklebungen auf feuchten Oberflächen sind. Es wird auch erwähnt, dass solche Haftklebebänder zur Verklebung von Druckplatten geeignet sind.

In US 5,476,712 wird ebenfalls ein doppelseitiges Haftklebeband beschrieben, dass im Flexodruckverfahren eingesetzt wird. Dieses Haftklebeband enthält wiederum ein thermoplastisches Elastomer, wobei hier eine zellförmige Struktur vorliegt, die durch expandierende Mikropartikel erzeugt werden.

In den obengenannten Fällen werden sehr viele unterschiedliche Haftklebemassen eingesetzt. Naturkautschukklebemassen besitzen gute klebrige Eigenschaften sind, aber nicht sehr scherfest bei Raumtemperatur und altern durch den Abbau über die im Polymer enthaltenden Doppelbindungen.

SIS oder SEBS basierende Haftklebemassen sind in der Regel sehr weich und haftklebrig und neigen auch bei hohen Temperaturen zu erweichen. Verklebt man unter Spannung die Druckplatte auf dem Druckzylinder mit einer SIS- oder SEBS-haltigen Haftklebemasse, so neigt die Druckplatte zum Ablösen, obwohl die Klebkraft hoch ist.
Acrylathaftklebemassen sind dagegen sehr gut zur Verklebung von Druckplatten auf Druckzylindern geeignet, müssen aber im Herstellungsprozess nach der Beschichtung vernetzt werden. Weiterhin neigen diese Haftklebemassen - durch die Vielzahl der Estergruppen und der daraus resultierenden Polarität - zu einem hohen Aufziehverhalten.
Als Resultat lassen sich die Druckplatten nur mit sehr hohem Kraftaufwand entfernen. Zudem muss die Haftklebemasse eine gewisse Härte aufweisen, damit die Druckplatten nach der Verklebung auf dem Druckzylinder über einen längeren Zeitraum nicht zum Kantenabheben neigen.

Die US 5 708 109 A offenbart mehrschichtige Klebebänder mit einem Klebstoff aus 25 bis 97 Teilen eines Alkylacrylats, wobei der Alkylrest aus 4 - 18 C-Atomen be-steht und
wobei das Polymer einen $T_g$-Wert unterhalb von 0 °C aufweist, 3 bis 75 Teilen eines nicht polaren ethylenisch ungesättigten Monomeren, dessen Polymer einen $T_g$-Wert oberhalb von 15 °C aufweist. Der Haftkleber kann vernetzt werden. Als weitere Bestandteile können Klebrigmacher, Farbstoffe usw. anwesend sein. Die Monomermischung wird durch Zugabe eines Radikalstarters polymerisiert.

Die EP 1 188 802 A offenbart eine druckempfindliche Klebstoffzusammensetzung enthaltend 50 bis 80 % eines Alkylacrylats mit 4 - 8 C-Atomen in der Alkylkette, 20 bis 30 % Isobornylacrylat, 1 bis 6 % Acrylsäure, 0,5 bis 6 % Hydroxyethylacrylat und einen radikalischen Initiator wie AIBN. Die Klebstoffzusammensetzung wird zur Beschichtung von Trägermaterialien wie z.B. Papierträgern für Briefmarken verwendet.

Die EP 655 490 A beschreibt radikalische Polymerisationsverfahren zur Polymeri-sation von Monomerengemischen auf Acrylatbasis. Zur Pfropfung werden Initiato-ren wie AIBN und Bis-(4-tert.-butylcyclohexylperoxidicarbonat) eingesetzt. Die ent-standenen Polymere werden vernetzt und zur Herstellung von Klebebändern ver-wendet.

Die EP 1 302 521 A und WO 2004/050784 A betreffen homogene Haftklebemassen auf Poly(meth)acrylatbasis, die eine geringe Klebkraft bzw. eine gleichmässige Klebkraft über einen weiten Abzugsgeschwindigkeitsbereich aufweisen.

Keine der vorgenannten Schriften beschreibt ein Verfahren zur Verwendung einer Haftklebemasse zur Verklebung von Druckplatten.

Somit besteht der Bedarf für eine Acrylathaftklebemasse, die zur Verklebung von Druckplatten geeignet ist und die oben genannten Anforderungen erfüllt.

Überraschenderweise und für den Fachmann nicht vorhersehbar wird die Aufgabe durch die Verwendung eines Haftklebers mit den im Anspruch 1 angegebenen gelöst.
Vorteilhafte Ausgestaltungen der Erfindung sind Gegenstand der Unteransprüche.

Danach betrifft die Erfindung die Verwendung eines beidseitig klebend ausgerüstetes Haftklebeband zur Fixierung von Druckplatten, insbesondere von mehrschichtigen Photopolymer-Druckplatten auf Druckzylindern oder Druckhülsen (Sleeves), wobei der Träger des Haftklebebandes eine Folie, Schaumstoff oder einem Verbund aus beidem ist und auf dem entsprechenden Träger oder Verbund beidseitig selbstklebende Beschichtungen aufgebracht sind, wobei beide aber zumindest die Seite zur Druckplatte mit einem erfindungsgemäßen Haftklebersystem erfinderischen Haftklebesystem ausgerüstet ist.

Das erfindungsgemäß verwendete Haftklebeband mit einem flächigen Trägermaterial ist beidseitig mit einer Haftklebemasse beschichtet, wobei mindestens eine Seite des Trägermaterials mit einer Haftklebemasse auf Polymerbasis beschichtet ist, welche aus einer Monomermischung aus mindestens den folgen-den Komponenten herstellbar ist:

i.a) 49,5 - 89,5 Gew.-% (bezogen auf die Monomermischung) Acrylsäureester und/oder Methacrylsäureester bzw

deren freien Säuren mit der folgenden Formel:

$CH_2=C(R_1)(COOR_2)$,

wobei $R_1$ = H oder $CH_3$ und $R_2$ ein Alkylrest mit 1 bis 10 C-Atomen oder H ist und das Homopolymer eine statische Glasübergangstemperatur von < -30 °C besitzt;

i.b) 10 bis 40 Gew.-% (bezogen auf die Monomermischung) Acrylsäureester und/oder Methacrylsäureester mit der folgenden Formel:

$CH_2=C(R_3)(COOR_4)$,

wobei $R_3$ = H oder $CH_3$ und $R_4$ ein zyklischer Alkylrest mit mindestens 8 C-Atomen oder ein linearer Alkylrest mit mindestens 12 C-Atomen ist und das Homopolymer eine statische Glasübergangstemperatur von mindestens 30 °C besitzt;

i.c) 0,5 - 10 Gew.-% (bezogen auf die Monomermischung) Acrylsäureester und/oder Methacrylsäureester mit der folgenden Formel:

$CH_2=C(R_3)(COOR_5)$,

wobei $R_3$ = H oder $CH_3$ und $R_5$ = H oder ein aliphatischer Rest mit einer funktionellen Gruppe X, wobei X = COOH, OH, -NH, $NH_2$, SH, $SO_3H$ umfasst und das Homopolymer eine statische Glasübergangstemperatur von mindestens 30 °C besitzt.

Die Herstellung der erfindungsgemäß eingesetzten Haftklebemassen erfolgt in einem Polymerisationsverfahren unter Verwendung von mindestens zwei thermisch zerfallenden Initiatoren mit einer Pfropfwirksamkeit von $\varepsilon < 5$ und von $\varepsilon > 10$, wobei mit $\varepsilon < 5$ zunächst linear polymerisiert wird und dann mit $\varepsilon > 10$ Pfropfpolymere hergestellt werden, mit Vernetzung der nach dem oben genannten Verfahren hergestellten Polymere mit einem Anteil von 0.2 - 1.0 Gew.-% Vernetzer.

Die erfindungsgemäß verwendeten Haftklebesysteme zeichnen sich dadurch aus, dass die oben genannten Vorgaben erfüllt werden und insbesondere folgende Vorteile aufweisen:

- vielfache Wiederverwendbarkeit (Repositionierbarkeit) der Haftklebebänder,
- Reversibilität auf verschiedenen Oberflächen
- geringes Aufziehen auch auf polaren Oberfläche
- minimiertes Kantenabheben nach der Verklebung auf dem Druckzylinder

Glastemperaturen werden als Ergebnisse aus quasistatischen Verfahren wie z. B. Differential Scanning Calorimetry (DSC) angegeben.

Zur Erzielung der Glasübergangstemperatur $T_G$ der Polymere werden entsprechend dem vorstehend und im weiteren gesagten die Monomere sehr bevorzugt derart ausgesucht und die mengenmäßige Zusammensetzung der Monomermischung vorteilhaft derart gewählt, dass sich nach der Gleichung (G1) (in Analogie zur *Fox*-Gleichung, vgl. T.G. Fox, Bull. Am. Phys. Soc. 1 (1956) 123) der gewünschte $T_G$-Wert für das Polymer ergibt.

$$\frac{1}{T_G} = \sum_n \frac{w_n}{T_{G,n}} \qquad (G1)$$

Hierin repräsentiert n die Laufzahl über die eingesetzten Monomere, $w_n$ den Massenanteil des jeweiligen Monomers n (Gew.-%) und $T_{G,n}$ die jeweilige Glasübergangstemperatur des Homopolymers aus den jeweiligen Monomeren n in K.

(Meth)Acrylmonomere, die sehr bevorzugt im Sinne von (i.a) als Komponente eingesetzt werden, umfassen Acryl- und Methacrylsäureester mit Alkylgruppen bestehend aus 1 bis 10 C-Atomen. Spezifische Beispiele für entsprechende Verbindungen sind, ohne sich durch diese Aufzählung einschränken zu wollen, n-Butylacrylat, n-Pentylacrylat, n-Hexylacrylat, n-Heptylacrylat, n-Octylacrylat, n-Nonylacrylat, 2-Ethylhexylacrylat und Isooctylacrylat.

(Meth)Acrylmonomere, die sehr bevorzugt im Sinne von (i.b) als Komponente eingesetzt werden, umfassen Acryl- und Methacrylsäureester mit einem zyklischen Alkylrestes mit mindestens 8 C-Atomen oder einem linearen Alkylrestes mit mindestens 12 C-Atomen. Spezifische Beispiele sind z.B. n-Laurylacrylat, Stearylacrylat, Isobornylacrylat, Isobornylmethacrylat und Norbonylacrylat, wobei diese Aufzählung keinen Anspruch auf Vollständigkeit besitzt.

(Meth)Acrylmonomere, die sehr bevorzugt im Sinne von (i.c) als Komponente eingesetzt werden, umfassen die freien Säuren sowie aliphatische Reste mit einer funktionellen Gruppe X, wobei X = COOH, OH, -NH, $NH_2$, SH, $SO_3H$ ist. Spezifische Beispiele für entsprechende Verbindungen sind, ohne sich durch diese Aufzählung einschränken zu wollen, Hydroxyethylacrylat, Hydroxypropylacrylat, Hydroxyethylmethacrylat, Hydroxypropylmethacrylat, n-Methylolacrylamid, Acrylsäure, Methacrylsäure, Allylalkohol, Maleinsäureanhydrid, Itaconsäureanhydrid und Itaconsäure.

In einer weiteren günstigen Ausführungsform sind die Monomere (i.c) derart funktionalisiert, dass eine thermisch initiierte Vernetzung durchgeführt werden kann. Als Vernetzer können unter anderem in günstiger Weise gewählt werden: Epoxide, Aziridine, Isocyanate, Polycarbodiimide und Metallchelate, um nur einige zu nennen.

Ein bevorzugtes Charakteristikum der für die erfindungsgemäß verwendeten Haftklebesysteme eingesetzten Copolymere ist, dass ihre Molmasse $M_n$ zwischen ca. 10.000 und ca. 600.000 g/mol, bevorzugt zwischen 30.000 und 400.000 g/mol, besonders bevorzugt zwischen 50.000 g/mol und 300.000 g/mol liegt.

Ein weiteres bevorzugtes Charakteristikum ist, dass die Polymerketten in einem verzweigten Zustand als Pfropfpolymere vorliegen.

Zur Herstellung der für die erfindungsgemäß verwendeten Haftklebemasse eingesetzten können prinzipiell alle radikalischen oder radikalisch-kontrolliert Polymerisationen eingesetzt werden, ebenso auch Kombinationen verschiedener Polymerisationsverfahren. Neben der konventionellen freien radikalischen Polymerisation seien z. B., ohne den Anspruch auf Vollständigkeit zu besitzen auch die ATRP, die Nitroxid/TEMPO- kontrollierte Polymerisation oder der RAFT-Prozess genannt, also insbesondere solche Verfahren, die eine Kontrolle der Ket-tenlängen oder der Polymerarchitektur erlauben.

Als radikalische Initiatoren für die freie radikalische Polymerisation können alle für Acrylate hierfür bekannten üblichen Initiatoren eingesetzt werden. Die Produktion von C-zentrierten Radikalen ist im Houben Weyl, Methoden der Organischen Chemie, Vol. E 19a, S. 60 - 147, beschrieben. Diese Methoden können in Analogie angewendet werden. Beispiele für Radikalquellen sind Peroxide, Hydroperoxide und Azoverbindungen, als einige nicht ausschließliche Beispiele für typische Radikalinitiatoren seien hier genannt Kaliumperoxodisulfat, Dibenzoylperoxid, Cumolhydroperoxid, Cyclohexanonperoxid, Di-t-butylperoxid, Azodiisosäurebutyronitril, Cyclohexylsulfonylacetylperoxid, Diisopropyl-percarbonat, t-Butylperoktoat, Benzpinacol. In einer sehr bevorzugten Variante werden die Initiatoren in mehreren Stufen hinzugegeben, so dass der Umsatz auf über 90 % gesteigert wird. Der in dem Polymer verbleibende Restmonomergehalt kann so auf unter 10 Gew.-% abgesenkt werden; durch einen geringen Restmonomergehalt werden die klebtechnischen Eigenschaften des Polyacrylates zur Verklebung von Druckzylindern erheblich verbessert.

Die zu Beginn eingesetzten Initiatoren werden dabei bevorzugt derart gewählt, dass sie eine geringe Tendenz zur Ausbildung von Seitenketten in den Polymeren aufweisen, ihre Pfropfwirksamkeit liegt bevorzugt unter einem Wert von $\varepsilon < 5$ bei der Temperatur des Reaktionsgemisches bei Zugabe des Initiators.

Die absolute Pfropfwirksamkeit (Crosslink-Effizienz) ist definiert als die Zahl der chemischen Seitenkettenbildungen pro 100 Mol-Einheiten an zersetztem Initiator. In Analogie zu van Drumpt und Oosterwijk [Journal of Polymer Science, Polymer Chemistry Edition 14 (1976) 1495 - 1511] läßt sich ein Wert für diese Zahl durch Bestimmung der Dimeren in einer definierten Lösung des Initiators angeben, siehe auch DE 43 40 297 A1:

Eine genau 0,1 molare Lösung des Initiators wird in n-Pentadecan unter He-Atmosphäre zersetzt. Die Reaktionszeit wird so gewählt, dass sie dem Zehnfachen der bei der gewählten Temperatur gegebenen Halbwertszeit des jeweiligen Initiators entspricht. Dadurch ist ein praktisch vollständiger Zerfall des Initiators gewährleistet. Anschließend wird der Anteil an entstandenem dimeren Pentadecan mittels GLC gemessen. Der prozentuale Anteil $\varepsilon$ wird als Maß für die Pfropfwirksamkeit angegeben. Üblicherweise wählt man die Reaktionstemperatur so, dass die Halbwertszeit des zu prüfenden Initiators bei dieser Temperatur 15 min beträgt.

Hohe $\varepsilon$-Werte für die Pfropfwirksamkeit bedeuten eine hohe Tendenz des Initiators, bei der Polymerisation Seitenketten zu bilden, kleine $\varepsilon$-Werte resultieren hingegen in bevorzugt linearen Polymeren.

In einer bevorzugten Vorgehensweise des Verfahrens sieht der Verfahrensablauf wie folgt aus:

- Als Reaktionslösung wird eine zumindest 50%ige Lösung der Monomere unter Zusatz des Initiators mit einem Wert von $\varepsilon < 5$ eingesetzt,
- in einem Temperaturbereich von 50 °C bis 90 °C wird die radikalische Polymerisation durchgeführt,
- während der Polymerisation wird mindestens einmal mit einem Initiator für radikalische Polymerisationen mit geringer Tendenz zur Seitenkettenbildung (Pfropfwirksamkeit $\varepsilon < 5$ bei der aktuellen Reaktionstemperatur) nachinitiiert,
- gegebenenfalls wird die Reaktion durch Verdünnung der Reaktionslösung je nach Viskosität des Polymerisats gesteuert,
- eine kontrollierte Nachinitiierung findet mit bis zu 2 Gew.-%, bezogen auf das Monomerengemisch, eines Initiators

mit erhöhter Tendenz zur Seitenkettenbildung (Pfropfwirksamkeit ε > 10 bei der aktuellen Reaktionstemperatur) statt,

- wobei die Polymerisation bis zu einem Umsatz > 90 %, bevorzugt > 95 % durchgeführt wird.

Bevorzugte Initiatoren mit einem geringen ε-Wert (ε < 5) sind solche, deren Radikale wegen ihres geringen Energiegehaltes keine oder nur selten Wasserstoffabstraktion an den Polymerketten verursachen. Bevorzugt werden hier zum Beispiel Azo-Initiatoren wie Azoisobuttersäuredinitril oder dessen Derivate, beispielsweise 2,2-Azobis-(2-methylbutyronitril) (Vazo67, DuPont), verwendet.

Initiatoren mit einer hohen Seitenkettenbildungstendenz (hoher ε-Wert > 10) liefern bereits bei relativ niedrigen Temperaturen hohe Pfropfausbeuten. Besonders bevorzugt werden hier Bis-(4-t-Butylcyclohexyl)peroxidicarbonat (Perkadox 16, Akzo Chemie), Dibenzoylperoxid oder dergleichen eingesetzt.

Die Polymerisation kann in Gegenwart eines organischen Lösungsmittels oder in Gegenwart von Wasser oder in Gemischen aus organischen Lösungsmitteln und/oder Wasser durchgeführt werden. Als Lösemittel für die Polymerisation können alle für radikalische Polymerisationen üblicherweise verwendeten oder geeigneten Lösemittel eingesetzt werden, insbesondere bieten sich Aceton, Essigester, Benzin, Toluol oder beliebige Gemische aus diesen Lösemitteln an. Bevorzugt wird so wenig Lösungsmittel wie möglich eingesetzt. Die Polymerisationszeit beträgt - je nach Umsatz, Temperatur und Initiierung - zwischen 6 und 48 h.

Zur Radikalstabilisierung werden in günstiger Vorgehensweise Nitroxide des Typs (NIT 1) oder (NIT 2) eingesetzt:

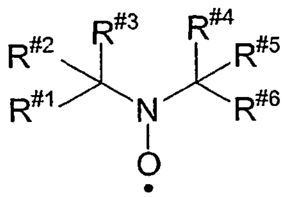

(NIT 1)

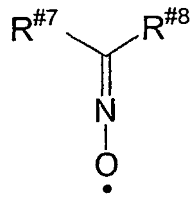

(NIT 2)

wobei $R^{\#1}$, $R^{\#2}$, $R^{\#3}$, $R^{\#4}$, $R^{\#5}$, $R^{\#6}$, $R^{\#7}$, $R^{\#8}$ unabhängig voneinander folgende Verbindungen oder Atome bedeuten:

i) Halogenide, wie z.B. Chlor, Brom oder Iod

ii) lineare, verzweigte, cyclische und heterocyclische Kohlenwasserstoffe mit 1 bis 20 Kohlenstoffatomen, die gesättigt, ungesättigt oder aromatisch sein können,

iii) Ester $-COOR^{\#9}$ , Alkoxide $-OR^{\#10}$ und/oder Phosphonate $-PO(OR^{\#11})_2$, wobei $R^{\#9}$, $R^{\#10}$ und/oder $R^{\#11}$ für Reste aus der Gruppe ii) stehen.

Verbindungen der Struktur (NIT 1) oder (NIT 2) können auch an Polymerketten jeglicher Art gebunden sein (vorrangig in dem Sinne, dass zumindest einer der oben genannten Reste eine derartige Polymerkette darstellt).

Mehr bevorzugt werden kontrollierte Regler für die Polymerisation von Verbindungen des Typs:

- 2,2,5,5-Tetramethyl-1-pyrrolidinyloxyl (PROXYL), 3-Carbamoyl-PROXYL, 2,2-dimethyl-4,5-cyclohexyl-PROXYL, 3-oxo-PROXYL, 3-Hydroxylimine-PROXYL, 3-Aminomethyl-PROXYL, 3-Methoxy-PROXYL, 3-t-Butyl-PROXYL, 3,4-Di-t-butyl-PROXYL
- 2,2,6,6-Tetramethyl-1-piperidinyloxyl pyrrolidinyloxyl (TEMPO), 4-Benzoyloxy-TEMPO, 4-Methoxy-TEMPO, 4-Chloro-TEMPO, 4-Hydroxy-TEMPO, 4-Oxo-TEMPO, 4-Amino-TEMPO, 2,2,6,6,-Tetraethyl-1-piperidinyloxyl, 2,2,6-Trimethyl-6-ethyl-1-piperidinyloxyl
- N-tert.-Butyl-1-phenyl-2-methyl propyl Nitroxid
- N-tert.-Butyl-1-(2-naphtyl)-2-methyl propyl Nitroxid
- N-tert.-Butyl-1-diethylphosphono-2,2-dimethyl propyl Nitroxid
- N-tert.-Butyl-1-dibenzylphosphono-2,2-dimethyl propyl Nitroxid
- N-(1-Phenyl-2-methyl propyl)-1-diethylphosphono-1-methyl ethyl Nitroxid
- Di-t-Butylnitroxid

- Diphenylnitroxid
- t-Butyl-t-amyl Nitroxid

US 4,581,429 A offenbart ein kontrolliert radikalisches Polymerisationsverfahren, das als Initiator eine Verbindung der Formel R'R"N-O-Y anwendet, worin Y eine freie radikalische Spezies ist, die ungesättigte Monomere polymerisieren kann. Die Reaktionen weisen aber im allgemeinen geringe Umsätze auf. Besonders problematisch ist die Polymerisation von Acrylaten, die nur zu sehr geringen Ausbeuten und Molmassen abläuft. WO 98/13392 A1 beschreibt offenkettige Alkoxyaminverbindungen, die ein symmetrisches Substitutionsmuster aufweisen. EP 735 052 A1 offenbart ein Verfahren zur Herstellung thermoplastischer Elastomere mit engen Molmassenverteilungen. WO 96/24620 A1 beschreibt ein Polymerisationsverfahren, bei dem sehr spezielle Radikalverbindungen wie z. B. phosphorhaltige Nitroxide, die auf Imidazolidin basieren, eingesetzt werden. WO 98/44008 A1 offenbart spezielle Nitroxyle, die auf Morpholinen, Piperazinonen und Piperazindionen basieren. DE 199 49 352 A1 beschreibt heterozyklische Alkoxyamine als Regulatoren in kontrolliert radikalischen Polymerisationen. Entsprechende Weiterentwicklungen der Alkoxyamine bzw. der korrespondierenden freien Nitroxide verbessern die Effizienz zur Herstellung von Polyacrylaten (Hawker, Beitrag zur Hauptversammlung der American Chemical Society, Frühjahr 1997; Husemann, Beitrag zum IUPAC World-Polymer Meeting 1998, Gold Coast).

Als weitere kontrollierte Polymerisationsmethode läßt sich in vorteilhafter Weise zur Synthese der Blockcopolymere die Atom Transfer Radical Polymerization (ATRP) einsetzen, wobei als Initiator bevorzugt monofunktionelle oderdifunktionelle sekundäre oder tertiäre Halogenide und zur Abstraktion des(r) Halogenids(e) Cu-, Ni-, Fe-, Pd-, Pt-, Ru-, Os-, Rh-, Co-, Ir-, Ag- oder Au-Komplexe (EP 0 824 111 A1; EP 826 698 A1; EP 824110 A1; EP 841 346 A1; EP 850 957 A1) eingesetzt werden. Die unterschiedlichen Möglichkeiten der ATRP sind ferner in den Schriften US 5,945,491 A, US 5,854,364 A und US 5,789,487 A beschrieben.

Als sehr bevorzugter Herstellprozeß wird eine Variante der RAFT-Polymerisation (reversible addition-fragmentation chain transfer polymerization) durchgeführt. Der Polymerisationsprozeß ist z. B. in den Schriften WO 98/01478 A1 und WO 99/31144 A1 ausführlich beschrieben. In einer sehr vorteilhaften Variante werden beispielsewise die Thioverbindungen (THI 1) und (THI 2) zur Polymerisation eingesetzt, wobei Φ ein Phenylring, der unfunktionalisiert oder durch Alkyl- oder Arylsubstituenten, die direkt oder über Ester- oder Etherbrücken verknüpft sind, funktionalisiert sein kann, oder eine Cyanogruppe sein kann, oder einen gesättigten oder ungesättgten aliphatischen Rest sein kann.

Funktionalisierungen für den Phenylring Φ können beispielsweise Halogene, Hydroxygruppen, Epoxidgruppen, stickstoff- oder schwefelenthaltende Gruppen sein, ohne daß diese Liste Anspruch auf Vollständigkeit erhebt.

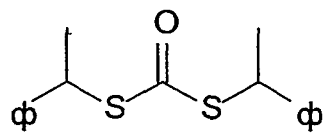

(THI 1)

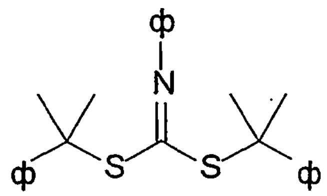

(THI 2)

Außerdem können Thioester der allgemeinen Struktur

$R^{\$1}$-C(S)-S-$R^{\$2}$ (THE)

zum Einsatz kommen, insbesondere, um asymmetrische Systeme herzustellen. Dabei können $R^{\$1}$ und $R^{\$2}$ unabhängig voneinander gewählt werden und $R^{\$1}$ ein Rest aus einer der folgenden Gruppen i) bis iv) und $R^{\$z}$ ein Rest aus einer der folgenden Gruppen i) bis iii) sein kann:

i) $C_1$- bis $C_{18}$-Alkyl, $C_2$- bis $C_{18}$-Alkenyl, $C_2$- bis $C_{18}$-Alkinyl, jeweils linear oder verzweigt; Aryl-, Phenyl-, Benzyl-, aliphatische und aromatische Heterozyklen.
ii) -$NH_2$, -NH-$R^{\$3}$, -$NR^{\$3}R^{\$4}$, -NH-C(O)-$R^{\$3}$, -$NR^{\$3}$-C(O)-$R^{\$4}$, -NH-C(S)-$R^{\$3}$, -$NR^{\$3}$-C(S)-$R^{\$4}$,

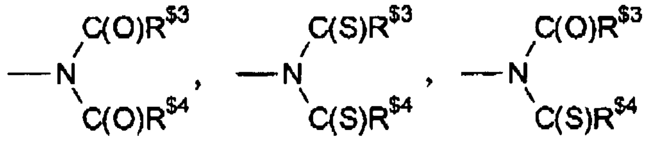

wobei $R^{\$3}$ und $R^{\$4}$ unabhängig voneinander gewählte Reste aus der Gruppe i) sind.
iii) -S-$R^{\$5}$, -S-C(S)-$R^{\$5}$, wobei $R^{\$5}$ ein Rest aus einer der Gruppen i) oder ii) sein kann.
iv) -O-$R^{\$6}$, -O-C(O)-$R^{\$6}$, wobei $R^{\$6}$ ein Rest gewählt aus einer der Gruppen i) oder ii) sein kann.

Die nach den oben beschriebenen Verfahren hergestellten Haftklebemas-sen können aus Lösung oder aus der Schmelze beschichtet werden. In einer Ausführung der Erfindung wird das Lösemittel bevorzugt in einem Aufkonzentrationsextruder unter vermindertem Druck abgezogen, wozu beispielsweise Ein- oder Doppelschneckenextruder eingesetzt werden können, die bevorzugt das Lösemittel in verschiedenen oder gleichen Vakuumstufen abdestillieren und über eine Feedvorwärmung verfügen.

Zur vorteilhaften erfindungsgemäßen Weiterentwicklung können den Haftklebemassen Klebharze beigemischt werden. Prinzipiell lassen sich alle in dem entsprechenden Polymer löslichen Harze verwenden. Geeignete Klebharze umfassen unter anderem Kolophonium und Kolophoniumderivate (Kolophoniumester, auch durch z. B. Disproportionierung oder Hydrierung stabilisierte Kolophoniumderivate), Polyterpenharze, Terpenphenolharze, Alkylphenolharze, aliphatische, aromatische und aliphatisch-aromatische Kohlenwasserstoffharze, um nur einige zu nennen. Vorrangig werden Harze gewählt, die vorzugsweise mit dem Polymer verträglich sind Der Gewichtsanteil der Harze am Blockcopolymer beträgt typischerweise bis zu 40 Gew. %, mehr bevorzugt bis zu 30 Gew. %.

Weiterhin können optional Weichmacher (Plastifizierungsmittel), Füllstoffe (z. B. Fasern, Ruß, Zinkoxid, Titandioxid, Kreide, Voll- oder Hohlglaskugeln, Mikrokugeln aus anderen Materialien, Kieselsäure, Silikate), Keimbildner, Blähmittel, Compoundierungsmittel und/oder Alterungsschutzmittel, z. B. in Form von primären und sekundären Antioxidantien oder in Form von Lichtschutzmitteln zugesetzt werden.

Ein weiterer Bestandteil des erfinderischen Verfahrens ist die Erhöhung der inneren Festigkeit (Kohäsion) der Haftklebemasse durch die Vernetzung mit einem Vernetzer.
Hierzu werden den Acrylathaftklebemassen verträgliche Vernetzersubstanzen zugesetzt. Als Vernetzer eignen sich z. B. Metallchelate, wie. Z. Aluminium- oderTitanchelate, multifunktionelle Isocyanate, multifunktionelle Amine, multifunktionelle Alkohole oder multifunktionelle Epoxide.
Für die Eigenschaften der Haftklebemasse ist es von großem Vorteil, wenn der Gewichtsprozentuale Anteil des Vernetzers bezogen auf das Polymer zwischen 0.2 und 1 % , besonders bevorzugt zwischen 0.3 und 0.8 % liegt.

Für eine weitere erfinderische Auslegung wird mit actinischer Strahlung vernetzt. Hierzu werden vorteilhaft multifunktionelle Acrylate oder Methacrylate als Vernetzer zugesetzt.

Zur optionalen Vernetzung mit UV-Licht werden den Acrylathaftklebemassen, welche in den erfindungsgemäßen Systemen zum Einsatz kommen, UV-absorbierende Photoinitiatoren zugesetzt. Nützliche Photoinitiatoren, welche sehr gut zu verwenden sind, sind Benzoinether, wie z. B. Benzoinmethylether und Benzoinisopropylether, substituierte Acetophenone, wie z. B. 2,2-Diethoxyacetophenon (erhältlich als Irgacure 651® von Fa. Ciba Geigy®), 2,2-Dimethoxy-2-phenyl-1-phenylethanon, Dimethoxyhydroxyacetophenon, substituierte $\alpha$-Ketole, wie z. B. 2-Methoxy-2-hydroxypropiophenon, aromatische Sulfonylchloride, wie z. B. 2-Naphthyl sulfonylchlorid, und photoaktive Oxime, wie z. B. 1-Phenyl-1,2-propandion-2-(O-ethoxycarbonyl)oxim.

Die oben erwähnten und weitere einsetzbare Photoinititatioren und andere vom Typ Norrish I oder Norrish II können folgenden Reste enthalten: Benzophenon-, Acetophenon-, Benzil-, Benzoin-, Hydroxyalkylphenon-, Phenylcyclohexylketon-, Anthrachinon-, Trimethylbenzoylphosphinoxid-, Methylthiophenylmorpholinketon-, Aminoketon-, Azobenzoin-, Thioxanthon-, Hexarylbisimidazol-, Triazin-, oder Fluorenon, wobei jeder dieser Reste zusätzlich mit einem oder mehreren Halogenatomen und/oder einer oder mehreren Alkyloxygruppen und/oder einer oder mehreren Aminogruppen oder Hydroxygruppen substituiert sein kann. Ein repräsentativer Überblick wird von Fouassier: "Photoinititation, Photopolymerization and Photocuring: Fundamentals and Applications", Hanser-Verlag, München 1995, gegeben. Ergänzend kann Carroy et al. in "Chemistry and Technology of UV and EB Formulation for Coatings, Inks and Paints", Oldring (Hrsg.), 1994, SITA, London zu Rate gezogen werden.

Prinzipiell ist es auch möglich, die Haftklebemassen mit Elektronenstrahlen allein oder zusätzlich zu vernetzen. Typische Bestrahlungsvorrichtungen, die zum Einsatz kommen können, sind Linearkathodensysteme, Scannersysteme bzw. Segmentkathodensysteme, sofern es sich um Elektronenstrahlbeschleuniger handelt. Eine ausführliche Beschreibung des Stands der Technik und die wichtigsten Verfahrensparameter findet man bei Skelhorne, Electron Beam Processing, in Chemistry and Technology of UV and EB formulation for Coatings, Inks and Paints, Vol. 1, 1991, SITA, London. Die typischen Beschleunigungsspannungen liegen im Bereich zwischen 50 kV und 500 kV, vorzugsweise 80

kV und 300 kV. Die angewandten Streudosen bewegen sich zwischen 5 bis 150 kGy, insbesondere zwischen 20 und 100 kGy.

Ein weiterer Teil der Erfindung ist die zum Druckzylinder gerichtete Seite der Haftklebemasse. Hier können alle dem Fachmann bekannten Haftklebemassen eingesetzt werden. So eignen sich Kautschuk basierende Haftklebemassen, Synthesekautschukhaftklebemassen, Haftklebemassen auf Basis von Polysilikonen, Polyurethanen, Polyolefine oder Polyacrylaten, ohne dass diese Aufzählung Anspruch auf Vollständigkeit hätte.

In einer bevorzugten Auslegung der Erfindung werden Haftklebesysteme auf Basis der zur Druckplatte gerichteten Haftklebemasse eingesetzt. Die Haftklebesysteme können die gleiche oder eine unterschiedliche Zusammensetzung besitzen. Die Zusammensetzung entspricht der bereits beschriebenen zur Druckplatte gerichteten Haftklebemasse.

In einer weiteren sehr bevorzugten Auslegung wird eine Acrylathaftklebemasse zur Verklebung auf dem Druckzylinder oder Sleeve, insbesondere Polyurethansleeves eingesetzt.

Als Trägermaterialien für die Haftklebebänder eignen sich die dem Fachmann geläufigen und üblichen Folien, wie z. B. Polyester, PET, PE, PP, BOPP, PVC etc.. Diese Aufzählung ist nicht abschließend. In einer besonders bevorzugten Auslegung wird eine Folie aus Polyethylenterephthalat eingesetzt.

Als Trägermaterialien für die doppelseitigen Haftklebebänder eigen sich aber auch Schaumträger. In bevorzugten Auslegungen werden Polymerschäume eingesetzt, wobei z. B. die Trägerschäume aus Polyolefinen - insbesondere Polyethylen oder Polypropylen - oder aus Polyurethanen oder aus Polyvinylchlorid bestehen.

Durch eine partielle Ätzung des Trägermaterials, zum Beispiel in Form von Schriftzügen, Strichen, Punkten oder anderen Motiven, kann die Masseverankerung an bestimmten Orten gezielt gestärkt werden. Auf diese Weise entstehen Sollbruchstellen, an denen die Masse bei der Demontage des Klebebandes umspult. Die Klebmasserückstände und das beschädigte Klebeband selbst verraten so ein Abziehen des Klebebandes zum Beispiel beim unautorisierten Öffnen von Kartonagen.

Generell kann durch eine Aufrauung des Trägermaterials eine Verbesserung der Haftklebemassenverankerung vorgenommen werden. Ein Weg zur Aufrauung und zur chemischen Modifizierung der Polymerstruktur verläuft über die nasschemische Ätzung des Trägermaterials. Neben der Ätzung kann auch auf andere Weise vorbehandelt werden. So lassen sich zur Verbesserung der Verankerung die Trägermaterialien physikalisch und chemisch vorbehandeln. Zur physikalischen Behandlung wird die Folie bevorzugt mit Flamme oder Corona oder Plasma behandelt. Für die chemische. Vorbehandlung wird das Trägermaterial mit Vorstrich versehen, wobei in einer besonders bevorzugten Auslegung Reaktiv-Vorstriche verwendet werden. Als Vorstrichmaterialien eignen sich z.B. Reaktivprimer.

Für die Verwendung als doppelseitiges Haftklebeband zur Verklebung von Druckplatten besitzt das Haftklebeband in einer besonders bevorzugten Auslegung der Erfindung den Produktaufbau in Figur 1.

Das Klebeband dient zum Verkleben eines Klischees, das sich aus einer PET-Folie 2 und einer Schicht eines Fotopolymers 1 zusammensetzt.

Die Schichten 3 bis 9 bilden ein doppelseitig klebend ausgerüstetes Klischeeklebeband, das dank seines geschäumten Trägers 8 kompressibel und elastisch ist.

Beginnend von der Seite, mittels derer das Klischee verklebt wird, besteht das Klebeband aus folgenden einzelnen Abschnitten:

| | |
|---|---|
| 3 | Haftklebemasse zur Verankerung des Klischees |
| 4 | Die aufgeraute obere Oberfläche der PET-Folie 5 |
| 5 | Folie aus Polyethylenterephthalat (PET) |
| 6 | Die aufgeraute untere Oberfläche der PET-Folie 5 |
| 7 | Haftklebemasse zur Verankerung des geschäumten Trägers 8 auf der Folie aus Polyethylenterephthalat (PET) 5 |
| 8 | geschäumter Träger. |
| 9 | Haftklebemasse zur Verankerung auf dem Druckzylinder |

Gerade in der Druckindustrie ist es von Bedeutung, dass die hier eingesetzten Klebebänder eine hohe Flexibilität aufweisen, also in gewissem Maße bei Druckanwendung ihre Dicke verändern können beziehungsweise nach Wegnahme der Belastung wieder ihre ursprüngliche Form annehmen können.

Aus diesem Grunde ist in einer weiteren vorteilhaften Ausführungsform des beidseitig klebend ausgerüsteten Klebebands zwischen der Folie aus Polyethylenterephthalat (PET) und zumindest einer Klebemasse ein geschäumter Träger vorhanden, insbesondere zwischen der dem Druckzylinder oder dem Sleeve zugewandten Klebemasse und der Folie aus Polyethylenterephthalat (PET), sofern das Klebeband in der Druckindustrie Verwendung findet.

Vorteilhaft ist darüber hinaus, wenn der geschäumte Träger 8 aus Polyolefin(en), PVC oder Polyurethan besteht. In einer besonders bevorzugten Auslegung werden geschäumte Polyethylene und Polypropylene eingesetzt. Weiter bevorzugt ist, wenn die Oberflächen des geschäumten Trägers physikalisch vorbehandelt sind, insbesondere Corona-vorbehandelt.

Weiter vorzugsweise hat die Folie aus Polyethylenterephthalat (PET) eine Dicke von 5 μm bis 500 μm, bevorzugt

5 µm bis 60 µm, ganz besonders bevorzugt 23 µm.

Neben dem in Figur 1 dargestellten Produktaufbau kann die Stabilisierungsfolie auch aus Polyolefinen, Polyurethanen oder PVC bestehen und neben der Ätzung auch auf verschiedene Weise vorbehandelt sein. So lassen sich zur Verbesserung der Verankerung Stabilisierungsfolien physikalisch und chemisch vorbehandeln. Zur physikalischen Behandlung wird die Folie bevorzugt mit Flamme oder Corona oder Plasma behandelt. Für die chemische Vorbehandlung wird die Folie mit Vorstrich versehen, wobei in einer besonders bevorzugten Auslegung Reaktiv-Vorstriche verwendet werden. Als Vorstrichmaterialien eignen sich z.B. Reaktivprimer.

In einer weiteren bevorzugten Auslegung wird die Stabilisierungsfolie aus PET oder einem anderen Material ein- oder beidseitig bedruckt. Diese Bedruckung kann unter einer später aufzubringenden Haftklebemasse erfolgen.

Für die Haftklebemassen 7 werden in bevorzugten Auslegungen Acrylathaftklebemassen eingesetzt.

Weiterhin kann das erfindungsgemäß verwendete Klebeband ein- oder beidseitig mit einer Abdeckung aus Papier oder aus einer entsprechenden Folie, insbesondere einer beidseitig silikonisierten, versehen sein, um ein längeres Lagern und eine bequeme Handhabung während des Gebrauchs zu gewährleisten.

Aufgrund seiner speziellen Eigenschaften lässt sich das beidseitig klebend ausgerüstete Klebeband hervorragend zur Fixierung von Druckplatten, insbe-sondere von mehrschichtigen Photopolymer-Druckplatten auf Druckzylindern oder Slee-ves einsetzen.

Auf die Seite des Klebebandes (s. Figur 1), die an der Trägerschicht der Druckplatte angesetzt wird, wird in einer Auslegung eine schwach klebende Acrylat-Klebmasse 9 beschichtet. Die Klebmasse weist insbesondere eine Klebkraft von 0,5 bis 5,5 N/cm, bevorzugt < 2.5 N/cm, auf.

Die andere Klebebeschichtung wird dann von einer stärker klebenden Schicht gebildet, die vorzugsweise ebenfalls auf Acrylat basiert. Diese Beschichtung ist insbesondere durch eine Klebkraft von 1 bis 6 N/cm, bevorzugt 4.5 N/cm, gekennzeichnet. Die angegebenen Klebkräfte sind nach AFERA 4001 gemessen.

Das erfindungsgemäß verwendete Klebeband ist aufgrund seiner besonderen Ausführung besonders mit den auf die Druckplatte abgestimmten Klebkräften hervorragend geeignet, die Druckplatten auf den Druckzylindern zu verkleben. Einerseits ist es möglich, die Druckplatten beliebig oft vor Druckbeginn zu repositionieren, andererseits aber ist eine feste Verklebung der Platte während des Druckvorganges gewährleistet.

Die Druckplatte lässt sich vom Haftklebeband ohne irgendeine Beschädigung entfernen. Ein Abschälen der Trägerschicht der Platte oder die Bildung von unerwünschten Falten in der Platte während des Entfernens treten nicht auf. Auch nach dem Entfernen des Klebebands von dem Druckzylinder verbleiben keine Rückstände.

Im Folgenden werden die Vorteile des erfindungsgemäß verwendeten Klebebands in mehreren Versuchen beschrieben.

## ***Experimente***

Die erfindungsgemäß verwendeten Haftklebebänder werden im Folgenden durch Experimente beschrieben.

Folgende Testmethoden wurden angewendet, um die klebtechnischen Eigenschaften der hergestellten Haftklebemassen zu evaluieren.

### Testmethoden

#### *A. Klebkraft*

Die Prüfung der Schälfestigkeit (Klebkraft) erfolgte gemäß PSTC-1. Auf eine 25 µm dicke PET-Folie wird eine Haftklebeschicht mit 20 g/m$^2$ aufgebracht.
Ein 2 cm breiter Streifen dieses Musters wird auf eine Stahlplatte durch dreimaliges doppeltes Überrollen mittels einer 2 kg Rolle verklebt. Die Platte wird eingespannt und der Selbstklebestreifen über sein freies Ende an einer Zugprüfmaschine unter einem Schälwinkel von 180° mit einer Geschwindigkeit von 300 mm/min abgezogen.

#### *B. Thermische Lagerung - Klebkraft*

Auf eine 25 µm dicke PET-Folie wird eine Haftklebeschicht mit 20 g/m$^2$ aufgebracht.
Ein 2 cm breiter Streifen dieses Musters wird in einem Trockenschrank für 3 Monate bei 60 °C gelagert. Anschließend wird auf eine Stahlplatte durch dreimaliges doppeltes Überrollen mittels einer 2 kg Rolle verklebt. Die Platte wird eingespannt und der Selbstklebestreifen über sein freies Ende an einer Zugprüfmaschine unter einem Schälwinkel von 180° mit einer Geschwindigkeit von 300 mm/min abgezogen.

*C. Klebkraft - Aufziehverhalten*

Die Prüfung der Schälfestigkeit (Klebkraft) erfolgte gemäß PSTC-1. Auf eine 25 µm dicke PET-Folie wird eine 100 µm dicke Haftklebeschicht aufgebracht. Ein 2 cm breiter Streifen dieses Musters auf eine Stahl-Platte durch dreimaliges doppeltes Überrollen mittels einer 2 kg Rolle verklebt. Nach 72 h Verklebung wird die Platte eingespannt und der Selbstklebestreifen über sein freies Ende an einer Zugprüfmaschine unter einem Schälwinkel von 180° mit einer Geschwindigkeit von 300 mm/min abgezogen.

***Prüfmusterherstellung***

*Beispiel 1:*

Ein für radikalische Polymerisationen konventioneller 2 L-Glasreaktor wurde mit 8 g Acrylsäure, 272 g 2-Ethylhexylacrylat, 120 g Isobornylacrylat und 266 g Aceton:Siedegrenzenbenzin 60/95 (1:1) befüllt. Nach 45 Minuten Durchleiten von Stickstoffgas unter Rühren wurde der Reaktor auf 58 °C hochgeheizt und 0,2 g Azoisobutyronitril (AIBN, Vazo 64™ , Fa. DuPont) gelöst in 10 g Aceton hinzugegeben. Anschließend wurde das äußere Heizbad auf 75 °C erwärmt und die Reaktion konstant bei dieser Außentemperatur durchgeführt. Nach 1 h Reaktionszeit wurde wiederum 0,2 g AIBN gelöst in 10 g Aceton hinzugegeben. Nach 5 Stunden Reaktionszeit wurden 0,8 g Bis-(4-tert.-Butylcyclohexanyl)-Peroxy-dicarbonat (Perkadox 16™, Fa Akzo Nobel) gelöst in 10 g Aceton hinzugegeben. Nach 6 Stunden wurde mit 100 g Siedegrenzenbenzin 60/95 verdünnt. Nach 7 Stunden Reaktionszeit wurden 0,8 g Bis-(4-tert.-Butylcyclohexanyl)-Peroxy-dicarbonat (Perkadox 16™, Fa Akzo Nobel) gelöst in 10 g Aceton hinzugegeben. Nach 10 Stunden wurde mit 150 g Siedegrenzenbenzin 60/95 verdünnt. Die Reaktion wurde nach 24 h Reaktionszeit abgebrochen und auf Raumtemperatur abgekühlt. Anschließend wurde das Polyacrylat mit 0,6 Gew.-% Aluminium-(IIII)-acetylacetonat (3 %ige Lösung Aceton) abgemischt, auf einen Feststoffgehalt von 30 % mit Siedegrenzenbenzin 60/95 verdünnt und dann aus Lösung auf eine PET-Folie auf beschichtet. Nach Trocknung für 30 Minuten bei 120 °C betrug der Masseauftrag 50 g/$m^2$. Zur Analyse der klebtechnischen Eigenschaften wurden die Testmethoden A, B und C durchgeführt.

*Beispiel 2:*

Ein für radikalische Polymerisationen konventioneller 2 L-Glasreaktor wurde mit 8 g Acrylsäure, 312 g 2-Ethylhexylacrylat, 80 g Isobornylacrylat und 170 g Aceton:Siedegrenzenbenzin 60/95 (1:1) befüllt. Nach 45 Minuten Durchleiten von Stickstoffgas unter Rühren wurde der Reaktor auf 58 °C hochgeheizt und 0,2 g Azoisobutyronitril (AIBN, Vazo 64™ , Fa. DuPont) gelöst in 10 g Aceton hinzugegeben. Anschließend wurde das äußere Heizbad auf 75 °C erwärmt und die Reaktion konstant bei dieser Außentemperatur durchgeführt. Nach 1 h Reaktionszeit wurde wiederum 0,2 g AIBN gelöst in 10 g Aceton hinzugegeben. Nach 5 Stunden Reaktionszeit wurden 0.8 g Bis-(4-tert.-Butylcyclohexanyl)-Peroxy-dicarbonat (Perkadox 16™, Fa Akzo Nobel) gelöst in 10 g Aceton hinzugegeben. Nach 6 Stunden wurde mit 100 g Siedegrenzenbenzin 60/95 verdünnt. Nach 7 Stunden Reaktionszeit wurden 0,8 g Bis-(4-tert.-Butylcyclohexanyl)-Peroxy-dicarbonat (Perkadox 16™, Fa Akzo Nobel) gelöst in 10 g Aceton hinzugegeben. Nach 10 Stunden wurde mit 150 g Siedegrenzenbenzin 60/95 verdünnt. Die Reaktion wurde nach 24 h Reaktionszeit abgebrochen und auf Raumtemperatur abgekühlt. Anschließend wurde das Polyacrylat mit 0.6 Gew.-% Aluminium-(IIII)-acetylacetonat (3 %ige Lösung Aceton) abgemischt, auf einen Feststoffgehalt von 30 % mit Siedegrenzenbenzin 60/95 verdünnt und dann aus Lösung auf eine PET-Folie auf beschichtet. Nach Trocknung für 30 Minuten bei 120°C betrug der Masseauftrag 50 g/$m^2$. Zur Analyse der klebtechnischen Eigenschaften wurden die Testmethoden A, B und C durchgeführt.

*Beispiel 3:*

Ein für radikalische Polymerisationen konventioneller 2 L-Glasreaktor wurde mit 8 g Acrylsäure, 312 g 2-Ethylhexylacrylat, 80 Stearylacrylat und 266 g Aceton:Siedegrenzenbenzin 60/95 (1:1) befüllt. Nach 45 Minuten Durchleiten von Stickstoffgas unter Rühren wurde der Reaktor auf 58 °C hochgeheizt und 0,2 g Azoisobutyronitril (AIBN, Vazo 64™ , Fa. DuPont) gelöst in 10 g Aceton hinzugegeben. Anschließend wurde das äußere Heizbad auf 75 °C erwärmt und die Reaktion konstant bei dieser Außentemperatur durchgeführt. Nach 1 h Reaktionszeit wurde wiederum 0,2 g AIBN gelöst in 10 g Aceton hinzugegeben. Nach 5 Stunden Reaktionszeit wurden 0,8 g Bis-(4-tert.-Butylcyclohexanyl)-Peroxy-dicarbonat (Perkadox 16™, Fa Akzo Nobel) gelöst in 10 g Aceton hinzugegeben. Nach 6 Stunden wurde mit 100 g Siedegrenzenbenzin 60/95 verdünnt. Nach 7 Stunden Reaktionszeit wurden 0,8 g Bis-(4-tert.-Butylcyclohexanyl)-Peroxy-dicarbonat (Perkadox 16™, Fa Akzo Nobel) gelöst in 10 g Aceton hinzugegeben.

Nach 10 Stunden wurde mit 150 g Siedegrenzenbenzin 60/95 verdünnt. Die Reaktion wurde nach 24 h Reaktionszeit abgebrochen und auf Raumtemperatur abgekühlt. Anschließend wurde das Polyacrylat mit 0,6 Gew.-% Aluminium-(IIII)-acetylacetonat (3 %ige Lösung Aceton) abgemischt, auf einen Feststoffgehalt von 30 % mit Siedegrenzenbenzin 60/95 verdünnt und dann aus Lösung auf eine PET-Folie auf beschichtet. Nach Trocknung für 30 Minuten bei 120 °C betrug der Masseauftrag 50 g/$m^2$. Zur Analyse der klebtechnischen Eigenschaften wurden die Testmethoden A, B und C durchgeführt.

*Beispiel 4:*

Ein für radikalische Polymerisationen konventioneller 2 L-Glasreaktor wurde mit 8 g Acrylsäure, 352 g 2-Ethylhexylacrylat, 40 g Isobornylacrylat und 170 g Aceton:Siedegrenzenbenzin 60/95 (1:1) befüllt. Nach 45 Minuten Durchleiten von Stickstoffgas unter Rühren wurde der Reaktor auf 58 °C hochgeheizt und 0,2 g Azoisobutyronitril (AIBN, Vazo 64™ , Fa. DuPont) gelöst in 10 g Aceton hinzugegeben. Anschließend wurde das äußere Heizbad auf 75 °C erwärmt und die Reaktion konstant bei dieser Außentemperatur durchgeführt. Nach 1 h Reaktionszeit wurde wiederum 0,2 g AIBN gelöst in 10 g Aceton hinzugegeben. Nach 5 Stunden Reaktionszeit wurden 0.8 g Bis-(4-tert.-Butylcyclohexanyl)-Peroxy-dicarbonat (Perkadox 16™, Fa Akzo Nobel) gelöst in 10 g Aceton hinzugegeben. Nach 6 Stunden wurde mit 100 g Siedegrenzenbenzin 60/95 verdünnt. Nach 7 Stunden Reaktionszeit wurden 0,8 g Bis-(4-tert.-Butylcyclohexanyl)-Peroxy-dicarbonat (Perkadox 16™, Fa Akzo Nobel) gelöst in 10 g Aceton hinzugegeben. Nach 10 Stunden wurde mit 150 g Siedegrenzenbenzin 60/95 verdünnt. Die Reaktion wurde nach 24 h Reaktionszeit abgebrochen und auf Raumtemperatur abgekühlt. Anschließend wurde das Polyacrylat mit 0.6 Gew.-% Aluminium-(IIII)-acetylacetonat (3 %ige Lösung Aceton) abgemischt, auf einen Feststoffgehalt von 30 % mit Siedegrenzenbenzin 60/95 verdünnt und dann aus Lösung auf eine PET-Folie auf beschichtet. Nach Trocknung für 30 Minuten bei 120°C betrug der Masseauftrag 50 g/$m^2$. Zur Analyse der klebtechnischen Eigenschaften wurden die Testmethoden A, B und C durchgeführt.

*Referenz R1:*

Ein für radikalische Polymerisationen konventioneller 2 L-Glasreaktor wurde mit 8 g Acrylsäure, 372 g 2-Ethylhexylacrylat, 20 g Isobornylacrylat und 170 g Aceton:Siedegrenzenbenzin 60/95 (1:1) befüllt. Nach 45 Minuten Durchleiten von Stickstoffgas unter Rühren wurde der Reaktor auf 58 °C hochgeheizt und 0,2 g Azoisobutyronitril (AIBN, Vazo 64™ , Fa. DuPont) gelöst in 10 g Aceton hinzugegeben. Anschließend wurde das äußere Heizbad auf 75 °C erwärmt und die Reaktion konstant bei dieser Außentemperatur durchgeführt. Nach 1 h Reaktionszeit wurde wiederum 0,2 g AIBN gelöst in 10 g Aceton hinzugegeben. Nach 5 Stunden Reaktionszeit wurden 0.8 g Bis-(4-tert.-Butylcyclohexanyl)-Peroxy-dicarbonat (Perkadox 16™, Fa Akzo Nobel) gelöst in 10 g Aceton hinzugegeben. Nach 6 Stunden wurde mit 100 g Siedegrenzenbenzin 60/95 verdünnt. Nach 7 Stunden Reaktionszeit wurden 0,8 g Bis-(4-tert.-Butylcyclohexanyl)-Peroxy-dicarbonat (Perkadox 16™, Fa Akzo Nobel) gelöst in 10 g Aceton hinzugegeben. Nach 10 Stunden wurde mit 150 g Siedegrenzenbenzin 60/95 verdünnt. Die Reaktion wurde nach 24 h Reaktionszeit abgebrochen und auf Raumtemperatur abgekühlt. Anschließend wurde das Polyacrylat mit 0.6 Gew.-% Aluminium-(IIII)-acetylacetonat (3 %ige Lösung Aceton) abgemischt, auf einen Feststoffgehalt von 30 % mit Siedegrenzenbenzin 60/95 verdünnt und dann aus Lösung auf eine PET-Folie auf beschichtet. Nach Trocknung für 30 Minuten bei 120°C betrug der Masseauftrag 50 g/$m^2$. Zur Analyse der klebtechnischen Eigenschaften wurden die Testmethoden A, B und C durchgeführt.

*Referenz R2:*

Ein für radikalische Polymerisationen konventioneller 2 L-Glasreaktor wurde mit 8 g Acrylsäure, 192 g 2-Ethylhexylacrylat, 200 g Isobornylacrylat und 170 g Aceton:Siedegrenzenbenzin 60/95 (1:1) befüllt. Nach 45 Minuten Durchleiten von Stickstoffgas unter Rühren wurde der Reaktor auf 58 °C hochgeheizt und 0,2 g Azoisobutyronitril (AIBN, Vazo 64™ , Fa. DuPont) gelöst in 10 g Aceton hinzugegeben. Anschließend wurde das äußere Heizbad auf 75 °C erwärmt und die Reaktion konstant bei dieser Außentemperatur durchgeführt. Nach 1 h Reaktionszeit wurde wiederum 0,2 g AIBN gelöst in 10 g Aceton hinzugegeben. Nach 5 Stunden Reaktionszeit wurden 0.8 g Bis-(4-tert.-Butylcyclohexanyl)-Peroxy-dicarbonat (Perkadox 16™, Fa Akzo Nobel) gelöst in 10 g Aceton hinzugegeben. Nach 6 Stunden wurde mit 100 g Siedegrenzenbenzin 60/95 verdünnt. Nach 7 Stunden Reaktionszeit wurden 0,8 g Bis-(4-tert.-Butylcyclohexanyl)-Peroxy-dicarbonat (Perkadox 16™, Fa Akzo Nobel) gelöst in 10 g Aceton hinzugegeben. Nach 10 Stunden wurde mit 150 g Siedegrenzenbenzin 60/95 verdünnt. Die Reaktion wurde nach 24 h Reaktionszeit abgebrochen und auf Raumtemperatur abgekühlt. Anschließend wurde das Polyacrylat mit 0.6 Gew.-% Aluminium-(IIII)-acetylacetonat (3 %ige Lösung Aceton) abgemischt, auf einen Feststoffgehalt von 30 % mit Siedegrenzenbenzin 60/95 verdünnt und dann aus Lösung auf eine PET-Folie auf beschichtet. Nach Trocknung für 30 Minuten bei 120°C betrug der Masseauftrag 50 g/$m^2$. Zur Analyse der klebtechnischen Eigenschaften wurden die Testmethoden A, B und C durchgeführt.

*Referenz R3:*

Ein für radikalische Polymerisationen konventioneller 2 L-Glasreaktor wurde mit 8 g Acrylsäure, 352 g 2-Ethylhexylacrylat, 40 g Isobornylacrylat und 170 g Aceton:Siedegrenzenbenzin 60/95 (1:1) befüllt. Nach 45 Minuten Durchleiten von Stickstoffgas unter Rühren wurde der Reaktor auf 58 °C hochgeheizt und 0,2 g Azoisobutyronitril (AIBN, Vazo 64™ , Fa. DuPont) gelöst in 10 g Aceton hinzugegeben. Anschließend wurde das äußere Heizbad auf 75 °C erwärmt und die Reaktion konstant bei dieser Außentemperatur durchgeführt. Nach 1 h Reaktionszeit wurde wiederum 0,2 g AIBN gelöst in 10 g Aceton hinzugegeben. Nach 6 Stunden wurde mit 100 g Siedegrenzenbenzin 60/95 verdünnt. Nach 10 Stunden wurde mit 150 g Siedegrenzenbenzin 60/95 verdünnt. Die Reaktion wurde nach 24 h Reaktionszeit abgebrochen und auf Raumtemperatur abgekühlt. Anschließend wurde das Polyacrylat mit 0.6 Gew.-% Aluminium-(IIII)-acetylacetonat (3 %ige Lösung Aceton) abgemischt, auf einen Feststoffgehalt von 30 % mit Siedegrenzenbenzin 60/95 verdünnt und dann aus Lösung auf eine PET-Folie auf beschichtet.

**Klebkraftbestimmung der Beispiele 1 - 4 und Referenzbeispiele R1 und R2**

Tabelle 1:

| Beispiel | KK auf Stahl sofort[a] [N/cm] Test A | KK auf Stahl nach 72 h[b] [N/cm] Test C | KK nach 60 °C[c] [N/cm] Test B |
|---|---|---|---|
| 1 | 5,0 | 5,2 | 5,5 |
| 2 | 3,8 | 4,2 | 4,4 |
| 3 | 2,4 | 2,7 | 2,9 |
| 4 | 3,0 | 3,4 | 3,7 |
| R1 | 2,7 | 3,6 | 5,4 |
| R2 | 2,2 | 2,6 | 6,0 |

[a]KK = Klebkraft auf Stahl bei 23 °C und 50 % Luftfeuchtigkeit nach der Verklebung gemessen
[b]KK = Klebkraft auf Stahl bei 23 °C und 50 % Luftfeuchtigkeit nach 72 Stunden Verklebung
[c]KK = Klebkraft auf Stahl bei 23 °C und 50 % Luftfeuchtigkeit nach der Verklebung; die Haftklebebänder wurden zuvor bei 60 °C für 3 Monate gelagert.
50 g/m$^2$ Masseauftrag auf 25 μm dicke PET-Folie

Den Werten aus Tabelle 1 kann entnommen werden, dass die erfinderischen Beispiele auch unter sehr extremen Lagerungsbedingungen ein nur sehr geringes Aufziehverhalten besitzen. Dagegen weisen die Beispiele R1 und R2 schon ein deutlich höheres Aufziehverhalten auf, da bei R1 die Masse schon sehr weich ist und daher über einen längeren Zeitraum sehr gut auffließen kann. Referenzbeispiel R2 ist dagegen sehr hart und zeigt daher - insbesondere bei hohen Temperaturen - ein verbessertes Auffließen und somit ein hohes Aufziehen im Test C. Für Anwendung zur Verklebung von Druckplatten werden bevorzugt Haftklebemassen mit einem geringen Aufziehverhalten bevorzugt eingesetzt, damit nach dem Druckprozess das Haftklebeband wieder leicht entfernt werden kann. Die Verklebungen können sich von mehreren Tagen bis zu mehreren Monaten hinziehen, so dass besonders der Test C aussagekräftig für die Eignung einer Haftklebemasse zur Verklebung von Druckplatten ist. Hier zeigen die nach dem Verfahren hergestellten erfinderischen Massen als sehr vorteilhaft z.B. gegenüber den Systemen, die einen nur sehr geringen (R1) oder sehr hohen Anteil (R2) Isobornylacrylat enthalten.

**Herstellung des doppelseitigen Haftklebebandverbundes:**

Eine 25 μm dicke PET-Folie beidseitig mit Trichloressigsäure geätzt wurde mit den Beispielen 1, 2, 3, 4, R1 oder R2 beschichtet. Der Masseauftrag betrug nach der Vernetzung und Trocknung 20 g/m$^2$. Hierfür wurde die Folien mit den Beispielen direkt aus Lösung beschichtet und bei 100°C 30min getrocknet. Die so beschichteten Muster wurden mit einem beidseitig silikonisierten Trennpapier abgedeckt. Anschließend wurde über einen Transferträger eine handelsübliche Acrylathaftklebemasse mit einem Masseauftrag von 20 g/m$^2$ auf die unbeschichteten Seite des vorherigen Verbundes auflaminiert.
Im folgenden Schritt wurde ein PE-EVA-Schaum mit einer Dicke von 500 μm und einem Raumgewicht von 270 kg/m$^3$ zukaschiert. Auf diesen Schaumträger wird dann über einen Transferträger eine handelsübliche Acrylathaftklebemasse

mit einem Masseauftrag von 50 g/$m^2$ auf die unbeschichteten Seite des vorherigen Verbundes auflaminiert.

**Verklebung der Druckplatten und Anwendung:**

Auf einen Stahlzylinder mit einem Durchmesser von 110 mm wurden die oben beschriebenen doppelseitigen Haftklebebänder mit der offen liegenden Masseseite (s. Figur 1 Schicht 9) geklebt. Hierauf wurde eine Druckplatte der Fa. DuPont Cyrel® HOS mit einer Dicke von 1.7 mm mit der Schicht 2 aus Figur auf die Haftklebemasse (Schicht 3, Figur 1) verklebt. Dieser Stahlzylinder mit Druckplatte wurde anschließend in eine Druckmaschine eingelegt und dort für 16 h mit einer Druckbeistellung von 150 μm gedruckt.
Für alle Beispiele ließ sich die Druckplatte sehr einfach mit einer Hand vom doppelseitigen Klebeband rückstandsfrei entfernen.
Nach 7-tägiger Lagerung bei 23°C und 50 % Luftfeuchtigkeit wurde das Kantenabheben der Druckplatte vom doppelseitigen Haftklebeband bestimmt. Die Werte sind in mm angebeben, sind gemittelt aus drei Messwerten und in Tabelle 2 zusammengefasst.

Tabelle 2:

| Beispiel | Kantenabheben der Druckplatte in mm |
|---|---|
| 1 | 5 |
| 2 | 20 |
| 3 | 25 |
| 4 | 18 |
| R1 | 55 |
| R2 | 60 |
| R3 | 35 |

Ein zur Druckplattenverklebung geeignetes Haftklebeband sollte ein Kantenabheben von weniger als 30 mm aufweisen. Die Grenze ergibt sich daraus, dass bei höheren Werten der Druckprozess stark beeinträchtigt wird.
Die Beispiele 1 bis 4 erfüllen diesen Anspruch zum einen durch das Herstellverfahren, der die Bildung von Pfropfcopolymeren zulässt. Beispiel R3 ohne Pfropfinitiator belegt, dass sich das Kantenabheben deutlich verschlechtert. Zum anderen zeigen die Beispiele 1 bis 4 in Kombination mit dem erfinderischen Verfahren das Kantenabheben auf das erforderliche Maß verringert werden kann.

**Patentansprüche**

1. Verfahren zur Verwendung einer Haftklebemasse auf Polymerbasis, bei dem die Haftklebemasse durch ein radikalisches Polymerisationsverfahren hergestellt wird, wobei eine Reaktionslösung einer Monomermischung aus mindestens den folgenden Komponenten:

   i.a) 49,5 - 89,5 Gew.-% (bezogen auf die Monomermischung) Acrylsäureester und/oder Methacrylsäureester mit der folgenden Formel:

   $$CH_2=C(R_1)(COOR_2),$$

   wobei $R_1$ = H oder $CH_3$ und $R_2$ ein Alkylrest mit 1 bis 10 C-Atomen ist und das Homopolymer eine statische Glasübergangstemperatur von < -30 °C besitzt;
   i.b) 10 bis 40 Gew.-% (bezogen auf die Monomermischung) Acrylsäureester und/oder Methacrylsäureester mit der folgenden Formel:

   $$CH_2=C(R_3)(COOR_4),$$

   wobei $R_3$ = H oder $CH_3$ und $R_4$ ein zyklischer Alkylrest mit mindestens 8 C-Atomen oder ein linearer Alkylrest mit mindestens 12 C-Atomen ist und das Homopolymer eine statische Glasübergangstemperatur von mindestens 30 °C besitzt;

i.c) 0.5 - 10 Gew.-% (bezogen auf die Monomermischung) Acrylsäureester und/oder Methacrylsäureester oder deren freien Säuren mit der folgenden Formel:

$$CH_2=C(R_3)(COOR_5).$$

wobei $R_3$ = H oder $CH_3$ und $R_5$ = H oder ein aliphatischer Rest mit einer funktionellen Gruppe X, wobei X = COOH, OH, -NH, $NH_2$, SH, $SO_3H$ umfasst und das Homopolymer eine statische Glasübergangstemperatur von mindestens 30 °C besitzt,
unter Zusatz eines thermisch zerfallenden Initiators mit einer Pfropfwirksamkeit von s < 5
und eines thermisch zerfallenden Initiators mit einer Pfropfwirksamkeit von ε > 10 hergestellt wird, wobei zuerst der Initiator mit einer Pfropfwirksamkeit von ε < 5 zur linearen Polymerisation und dann der Initiator mit einer Pfropfwirksamkeit von ε > 10 zur Pfropfpolymerisation der Reaktionslösung zugesetzt wird,
und die entstandenen Polymere unter Verwendung eines Vernetzers mit einem Anteil von 0,2 bis 1,0 Gew.-% vernetzt werden,
und die Haftklebemasse für ein Haftklebeband mit einem flächigen Trägermaterial, welches beidseitig mit einer Haftklebemasse beschichtet ist, zur Fixierung von Druckplatten, insbesondere von mehrschichtigen Photopolymer-Druckplatten, auf Druckzylinder oder Sleeves verwendet wird.

2. Verfahren nach Anspruch 1, **dadurch gekennzeichnet, dass** nach dem Zusetzen des Initiators mit einer Pfropfwirksamkeit von c < 5 und vor dem Zusetzen des Initiators mit einer Pfropfwirksamkeit von ε > 10 mindestens einmal mit einem Initiator mit einer Pfropfwirksamkeit von ε < 5 nachinitiiert wird.

3. Verfahren nach einem der vorangehenden Ansprüche, **dadurch gekennzeichnet, dass** die Reaktion durch Verdünnung der Reaktionslösung je nach Viskosität des Polymerisats gesteuert wird.

4. Verfahren nach einem der vorangehenden Ansprüche, **dadurch gekennzeichnet, dass** die Polymerisation bei einer Temperatur von 50 - 90 °C durchgeführt wird.

5. Verfahren nach einem der vorangehenden Ansprüche, **dadurch gekennzeichnet, dass** der Initiators mit einer Pfropfwirksamkeit von ε > 10 in einer Menge von bis zu 2 Gew.-% bezogen auf das Monomerengemisch eingesetzt wird.

6. Verfahren nach einem der vorangehenden Ansprüche, **dadurch gekennzeichnet, dass** der Initiator mit einer Pfropfwirksamkeit von ε > 10 Bis-(4-tert-Butylcyclohexyl)-peroxiddicarbonat oder Dibenzoylperoxid ist.

7. Verfahren nach einem der vorangehenden Ansprüche, **dadurch gekennzeichnet, dass** der Initiator mit einer Pfropfwirksamkeit von ε < 5 Azo-Initiatoren sind.

8. Verfahren nach Anspruch 7, **dadurch gekennzeichnet, dass** die Azo-Initiatoren Azoisobuttersäuredinitril oder dessen Derivate sind.

9. Verfahren nach einem der vorangehenden Ansprüche, **dadurch gekennzeichnet, dass** die Polymerisation bis zu einem Umsatz von mindestens 90 % durchgeführt wird.

10. Verfahren nach einem der vorangehenden Ansprüche, **dadurch gekennzeichnet, dass** das Verfahren als kontrollierte Polymerisation durchgeführt wird.

11. Verfahren nach Anspruch 10, **dadurch gekennzeichnet, dass** die kontrollierte Polymerisation unter Zusatz von Regler-Substanzen durchgeführt wird.

12. Verfahren nach Anspruch 11, **dadurch gekennzeichnet, dass** als Regler-Substanz mindestens eine aus der Gruppe von 2,2,5,5-Tetramethyl-1-pyrrolidinyloxyl (PROXYL), 3-Carbamoyl-PROXYL, 2,2-Dimethyl-4,5-cyclohexyl-PROXYL, 3-Oxo-PROXYL, 3-Hydroxylimin-PROXYL, 3-Aminomethyl-PROXYL, 3-Methoxy-PROXYL, 3-tert-Butyl-PROXYL, 3,4-Di-tert-butyl-PROXYL; 2,2,6,6-Tetramethyl-1-piperidinyloxyl-pyrrolidinyloxyl (TEMPO), 4-Benzoyloxy-TEMPO, 4-Methoxy-TEMPO, 4-Chloro-TEMPO, 4-Hydroxy-TEMPO, 4-Oxo-TEMPO, 4-Amino-TEMPO, 2,2,6,6-Tetraethyl-1-piperidinyloxyl, 2,2,6-Trimethyl-6-ethyl-1-piperidinyloxyl; N-tert-Butyl-1-phenyl-2-methylpropylnitroxid, N-tert-Butyl-1-(2-naphthyl)-2-methylpropyl-nitroxid, N-tert-Butyl-1-diethylphosphono-2,2-dimethylpropylnitroxid, N-tert-Butyl-1-dibenzylphosphono-2,2-dimethylpropylnitroxid, N-(1-Phenyl-2-methylpropyl)-1-diethyl-phosphono-1-methylethylnitroxid, Di-tert-Butylnitroxid, Diphenylnitroxid, tert-Butyl-tert-amylnitroxid verwendet wird.

**13.** Verfahren nach Anspruch 11, **dadurch gekennzeichnet, dass** die kontrollierte Polymerisation eine Variante der RAFT-Polymerisation ist.

**14.** Verfahren nach Anspruch 13, **dadurch gekennzeichnet, dass** die Thioverbindungen THI 1 und THI 2 oder die Thioester THE eingesetzt werden

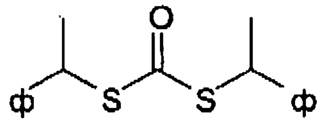

(THI 1)

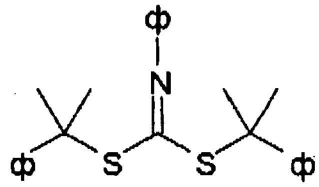

(THI 2)

$R^{\$1}$-C(S)-S-$R^{\$2}$ (THE),

wobei ϕ eine unfunktionalisierte oder mit Alkyl- oder Arylsubstituenten, die direkt oder über Ester- oder Etherbrükken verknüpft sind, funktionalisierte Phenylgruppe, Cyanogruppe oder einen gesättigten oder ungesättigten aliphatischen Rest bedeutet und wobei $R^{\$1}$ und $R^{\$2}$ unabhängig voneinander gewählt werden und $R^{\$1}$ ein Rest aus einer der folgenden Gruppen i) bis iv) und $R^{\$2}$ ein Rest aus einer der folgenden Gruppen i) bis iii) sein kann;

i) $C_1$- bis $C_{18}$-Alkyl, $C_2$- bis $C_{18}$-Alkenyl, $C_2$- bis $C_{18}$-Alkinyl, jeweils linear oder verzweigt; Aryl-, Phenyl-, Benzyl-, aliphatische und aromatische Heterocyclen
ii) -$NH_2$, -NH-$R^{\$3}$, -$NR^{\$3}R^{\$4}$, -NH-C(O)-$R^{\$3}$, -$NR^{\$3}$-C(O)-$R^{\$4}$, -NH-C(S)-$R^{\$3}$, -$NR^{\$3}$-C(S)-$R^{\$4}$,

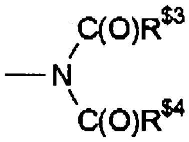 , 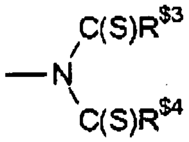 , 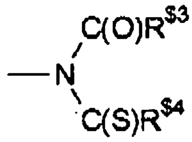

wobei $R^{\$3}$ und $R^{\$4}$ unabhängig voneinander gewählte Reste aus der Gruppe i) sind.
iii) -S-$R^{\$5}$, -S-C(S)-$R^{\$5}$, wobei $R^{\$5}$ ein Rest aus einer der Gruppen i) oder ii) sein kann.
iv) -O-$R^{\$6}$, -O-C(O)-$R^{\$6}$, wobei $R^{\$6}$ ein Rest aus einer der Gruppen i) oder ii) sein kann.

**15.** Verfahren nach Anspruch 11, **dadurch gekennzeichnet, dass** die kontrollierte Polymerisation eine Variante der ATRP-Polymerisation ist.

**16.** Verfahren nach Anspruch 11, **dadurch gekennzeichnet, dass** zur Radikalstabilisierung polymergebundene oder nicht polymergebundene Nitroxide des Typs (NIT 1) oder (NIT 2) eingesetzt werden:

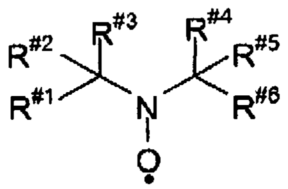

(NIT 1)

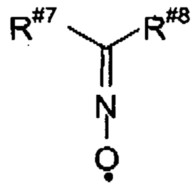

(NIT 2)

wobei $R^{\#1}$, $R^{\#2}$, $R^{\#3}$, $R^{\#4}$, $R^{\#5}$, $R^{\#6}$, $R^{\#7}$, $R^{\#8}$ unabhängig voneinander folgende Gruppen bedeuten können:

i) Halogenide
ii) Lineare, verzweigte, cyclische und heterocyclische Kohlenwasserstoffe mit 1 - 20 C-Atomen, die gesättigt, ungesättigt oder aromatisch sein können,
iii) $-COOR^{\#9}$, $-OR^{\#10}$ und $-PO(OR^{\#11})_2$, wobei $R^{\#9}$, $R^{\#10}$ und $R^{\#11}$ für Reste aus der Gruppe ii) stehen.

**17.** Verfahren nach einem der vorangehenden Ansprüche, **dadurch gekennzeichnet, dass** als Vernetzer Metallchelate, Isocyanate, Amine, Alkohole und/oder Epoxide zugesetzt werden.

**18.** Verfahren nach einem der vorangehenden Ansprüche, **dadurch gekennzeichnet, dass** die Polymere durch actinische Strahlung vernetzt werden.

**19.** Verfahren nach einem der vorangehenden Ansprüche, **dadurch gekennzeichnet, dass** die Polymere durch UV-Strahlung vernetzt werden.

**20.** Verfahren nach einem der vorangehenden Ansprüche, **dadurch gekennzeichnet, dass** es sich bei den Druckplatten um mehrschichtige Photopolymer-Druckplatten handelt.

## Claims

**1.** Method of using a polymer-based pressure-sensitive adhesive, in which the pressure-sensitive adhesive is produced by a free-radical polymerization method in which a reaction solution of a monomer mixture comprising at least the following components:

i.a) 49.5% - 89.5% by weight (based on the monomer mixture) of acrylic esters and/or methacrylic esters with the following formula:

$$CH_2=C(R_1)(COOR_2),$$

where $R_1$ = H or $CH_3$ and $R_2$ is an alkyl radical having 1 to 10 carbon atoms and the homopolymer possesses a static glass transition temperature of < -30°C;
i.b) 10% to 40% by weight (based on the monomer mixture) of acrylic esters and/or methacrylic esters with the following formula:

$$CH_2=C(R_3)\ (COOR_4),$$

where $R_3$ = H or $CH_3$ and $R_4$ is a cyclic alkyl radical having at least 8 carbon atoms or a linear alkyl radical having at least 12 carbon atoms and the homopolymer possesses a static glass transition temperature of at least 30°C;
i.c) 0.5% - 10% by weight (based on the monomer mixture) of acrylic esters and/or methacrylic esters or free acids thereof with the following formula:

$CH_2=C(R_3)(COOR_5)$,

where $R_3$ = H or $CH_3$ and $R_5$ = H or an aliphatic radical containing a functional group X, X comprising COOH, OH, -NH, $NH_2$, SH, $SO_3H$, and the homopolymer possesses a static glass transition temperature of at least 30°C, with the addition of a thermally decomposing initiator having a grafting activity of ε < 5 and of a thermally decomposing initiator having a grafting activity of ε > 10, is prepared, in which first the initiator having a grafting activity of ε < 5 is added for the linear polymerization and then the initiator having a grafting activity of ε > 10 is added for the graft polymerization of the reaction solution,
and the resulting polymers are crosslinked using a crosslinker having a fraction of from 0.2 to 1.0% by weight, and the pressure-sensitive adhesive is used for a pressure-sensitive adhesive tape with a sheetlike carrier material which is coated on both sides with a pressure-sensitive adhesive, for mounting printing plates, especially multilayer photopolymer printing plates, to printing cylinders or sleeves.

2. Method according to claim 1, **characterized in that** after the initiator having a grafting activity of ε < 5 has been added and before the initiator having a grafting activity of ε > 10 has been added, initiation is repeated at least once with an initiator having a grafting activity of ε < 5.

3. Method according to any one of the preceding claims, **characterized in that** the reaction is controlled by diluting the reaction solution in accordance with the viscosity of the polymer.

4. Method according to any one of the preceding claims, **characterized in that** the polymerization is carried out at a temperature of 50 - 90°C.

5. Method according to any one of the preceding claims, **characterized in that** the initiator having a grafting activity of ε > 10 is used in an amount of up to 2% by weight, based on the monomer mixture.

6. Method according to any one of the preceding claims, **characterized in that** the initiator having a grafting activity of ε > 10 is bis(4-tert-butylcyclohexyl) peroxide dicarbonate or dibenzoyl peroxide.

7. Method according to any one of the preceding claims, **characterized in that** the initiator having a grafting activity of ε < 5 comprises azo initiators.

8. Method according to claim 7, **characterized in that** the azo initiators comprise azoisobutyrodinitrile or derivatives thereof.

9. Method according to any one of the preceding claims, **characterized in that** the polymerization is carried out to a conversion of at least 90%.

10. Method according to any one of the preceding claims, **characterized in that** the method is carried out as a controlled polymerization.

11. Method according to claim 10, **characterized in that** the controlled polymerization is carried out with the addition of regulator substances.

12. Method according to claim 11, **characterized in that** as regulator substance use is made of at least one from the group of 2,2,5,5-tetramethyl-1-pyrrolidinyloxyl (PROXYL), 3-carbamoyl-PROXYL, 2,2-dimethyl-4,5-cyclohexyl-PROXYL, 3-oxo-PROXYL, 3-hydroxylimine-PROXYL, 3-aminomethyl-PROXYL, 3-methoxy-PROXYL, 3-t-butyl-PROXYL, 3,4-di-t-butyl-PROXYL; 2,2,6,6-tetramethyl-1-piperidinyloxyl-pyrrolidinyloxyl (TEMPO), 4-benzoyloxy-TEMPO, 4-methoxy-TEMPO, 4-chloro-TEMPO, 4-hydroxy-TEMPO, 4-oxo-TEMPO, 4-amino-TEMPO, 2,2,6,6-tetraethyl-1-piperidinyloxyl, 2,2,6-trimethyl-6-ethyl-1-piperidinyloxyl, N-tert-butyl 1-phenyl-2-methylpropyl nitroxide, N-tert-butyl 1-(2-naphthyl)-2-methylpropyl nitroxide, N-tert-butyl 1-diethylphosphono-2,2-dimethylpropyl nitroxide, N-tert-butyl 1-dibenzylphosphono-2,2-dimethylpropyl nitroxide, N-(1-phenyl-2-methylpropyl) 1-diethylphosphono-1-methylethyl nitroxide, di-t-butyl nitroxide, diphenyl nitroxide, tert-butyl tert-amyl nitroxide.

13. Method according to claim 11, **characterized in that** the controlled polymerization is a variant of the RAFT polymerization.

14. Method according to claim 13, **characterized in that** the thio compounds THI 1 and THI 2 or the thioesters THE

are used,

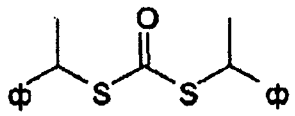

(THI 1)

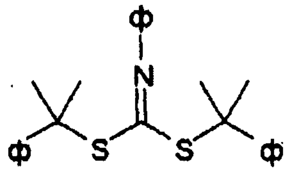

(THI 2)

$R^{\$1}$-C(S)-S-$R^{\$2}$ (THE),

Φ being an unfunctionalized phenyl group or a phenyl group functionalized with alkyl or aryl substituents attached directly or via ester or ether bridges, a cyano group or a saturated or unsaturated aliphatic radical, and where $R^{\$1}$ and $R^{\$2}$ are chosen independently of one another and $R^{\$1}$ can be a radical from one of groups i) to iv) below, and $R^{\$2}$ a radical from one of groups i) to iii) below:

i) $C_1$ to $C_{18}$ alkyl, $C_2$ to $C_{18}$ alkenyl, $C_2$ to $C_{18}$ alkynyl, each linear or branched; aryl, phenyl, benzyl, aliphatic and aromatic heterocycles.
ii) $-NH_2$, -NH-$R^{\$3}$, -N$R^{\$3}R^{\$4}$, -NH-C(O)-$R^{\$3}$, -N$R^{\$3}$-C(O)-$R^{\$4}$, -NH-C(S)-$R^{\$3}$, -N$R^{\$3}$-C(S)-$R^{\$4}$,

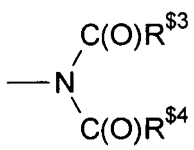 , 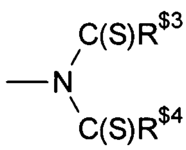 , 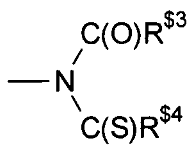

where $R^{\$3}$ and $R^{\$4}$ are radicals selected independently of one another from group i).
iii) -S-$R^{\$5}$ or -S-C(S)-$R^{\$5}$, $R^{\$5}$ being able to be a radical from one of groups i) or ii).
iv) -O-$R^{\$6}$ or -O-C(O)-$R^{\$6}$, $R^{\$6}$ being able to be a radical from one of groups i) or ii).

**15.** Method according to claim 11, **characterized in that** the controlled polymerization is a variant of ATRP polymerization.

**16.** Method according to claim 11, **characterized in that** radical stabilization is effected using polymer-bonded or non-polymer-bonded nitroxides of the type (NIT 1) or (NIT 2):

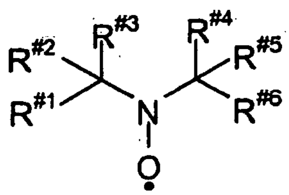

(NIT 1)

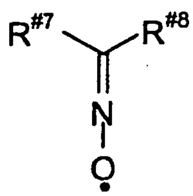

(NIT 2)

where $R^{\#1}$, $R^{\#2}$, $R^{\#3}$, $R^{\#4}$, $R^{\#5}$, $R^{\#6}$, $R^{\#7}$ and $R^{\#8}$ independently of one another can denote the following groups:

i) halides,
ii) linear, branched, cyclic and heterocyclic hydrocarbons having 1 to 20 carbon atoms, which may be saturated, unsaturated or aromatic,
iii) $-COOR^{\#9}$ ,$-OR^{\#10}$ and $-PO(OR^{\#11})_2$, where $R^{\#9}$, $R^{\#10}$ and $R^{\#11}$ stand for radicals from group ii).

17. Method according to any one of the preceding claims, **characterized in that** crosslinkers added are metal chelates, isocyanates, amines, alcohols and/or epoxides.

18. Method according to any one of the preceding claims, **characterized in that** the polymers are crosslinked by actinic radiation.

19. Method according to any one of the preceding claims, **characterized in that** the polymers are crosslinked by UV radiation.

20. Method according to any one of the preceding claims, **characterized in that** the printing plates are multilayer photopolymer printing plates.

## Revendications

1. Procédé d'utilisation d'une masse autoadhésive à base de polymère, dans lequel la masse autoadhésive est préparée par un procédé de polymérisation radicalaire, où on prépare une solution réactionnelle d'un mélange de monomères constitué par au moins les composants suivants :

i.a) 49,5 à 89,5% en poids (par rapport au mélange de monomères) d'ester de l'acide acrylique et/ou de l'acide méthacrylique présentant la formule suivante :

$$CH_2=C(R_1)(COOR_2),$$

où $R_1$ = H ou $CH_3$ et $R_2$ représente un radical alkyle comprenant 1 à 10 atomes de carbone et l'homopolymère présente une température de transition vitreuse statique < -30°C ;
i.b) 10 à 40% en poids (par rapport au mélange de monomères) d'ester de l'acide acrylique et/ou de l'acide méthacrylique présentant la formule suivants :

$$CH_2=C(R_3)(COOR_4),$$

où $R_3$ = H ou $CH_3$ et $R_4$ représente un radical alkyle cyclique comprenant au moins 8 atomes de carbone ou un radical alkyle linéaire comprenant au moins 12 atomes de carbone et l'homopolymère présente une température de transition vitreuse statique d'au moins 30°C ;
i.c) 0,5 à 10% en poids (par rapport au mélange de monomères) d'ester de l'acide acrylique et/ou de l'acide méthacrylique ou leurs acides libres présentant la formule suivante :

$$CH_2=C(R_3)(COOR_5),$$

où $R_3$ = H ou $CH_3$ et $R_5$ = H ou un radical aliphatique présentant un groupe fonctionnel X, où X = COOH, OH, -NH, $NH_2$, SH, $SO_3H$ et l'homopolymère présente une température de transition vitreuse statique d'au moins 30°C,

avec addition d'un initiateur à décomposition thermique présentant une activité de greffage $\varepsilon$ < 5 et d'un initiateur à décomposition thermique présentant une activité de greffage $\varepsilon$ > 10, où l'initiateur présentant une activité de greffage $\varepsilon$ < 5 est d'abord ajouté pour la polymérisation linéaire, puis l'initiateur présentant une activité de greffage $\varepsilon$ > 10 est ajouté pour la polymérisation de greffage à la solution réactionnelle,
et les polymères formés sont réticulés en utilisant un réticulant en une proportion de 0,2 à 1,0% en poids,
et la masse autoadhésive est utilisée pour une bande autoadhésive présentant un matériau support plat qui est revêtu sur les deux faces par une masse autoadhésive, pour la fixation de plaques d'imprimerie, en particulier de plaques d'imprimerie à base de photopolymères à plusieurs couches, sur un cylindre d'impression ou des manchons.

2. Procédé selon la revendication 1, **caractérisé en ce qu'**après l'addition de l'initiateur présentant une activité de

greffage ε < 5 et avant l'addition de l'initiateur présentant une activité de greffage ε > 10, on post-initie au moins une fois avec un initiateur présentant une activité de greffage ε < 5.

3. Procédé selon l'une quelconque des revendications précédentes, **caractérisé en ce que** la réaction est contrôlée par dilution de la solution réactionnelle selon la viscosité du polymère.

4. Procédé selon l'une quelconque des revendications précédentes, **caractérisé en ce que** la polymérisation est réalisée à une température de 50-90°C.

5. Procédé selon l'une quelconque des revendications précédentes, **caractérisé en ce qu'**on utilise l'initiateur présentant une activité de greffage ε > 10 en une quantité allant jusqu'à 2% en poids par rapport au mélange de monomères.

6. Procédé selon l'une quelconque des revendications précédentes, **caractérisé en ce que** l'initiateur présentant une activité de greffage ε > 10 est le dicarbonate de bis-(4-tert-butylcyclohexyl)peroxyde ou le peroxyde de dibenzoyle.

7. Procédé selon l'une quelconque des revendications précédentes, **caractérisé en ce que** l'initiateur présentant une activité de greffage ε < 5 réside dans des initiateurs azo.

8. Procédé selon la revendication 7, **caractérisé en ce que** les initiateurs azo sont le dinitrile de l'acide azoisobutyrique ou ses dérivés.

9. Procédé selon l'une quelconque des revendications précédentes, **caractérisé en ce que** la polymérisation est réalisée jusqu'à une conversion d'au moins 90%.

10. Procédé selon l'une quelconque des revendications précédentes, **caractérisé en ce que** le procédé est réalisé sous forme d'une polymérisation contrôlée.

11. Procédé selon la revendication 10, **caractérisé en ce que** la polymérisation contrôlée est réalisée avec addition de substances de régulation.

12. Procédé selon la revendication 11, **caractérisé en ce qu'**on utilise comme substance de régulation au moins une substance du groupe formé par le 2,2,5,5-tétraméthyl-1-pyrrolidinyloxyle (PROXYL), le 3-carbamoyl-PROXYLE, le 2,2-diméthyl-4,5-cyclohexyl-PROXYLE, le 3-oxo-PROXYLE, le 3-hydroxylimine-PROXYLE, le 3-aminométhyl-PROXYLE, le 3-méthoxy-PROXYLE, le 3-tert-butyl-PROXYLE, le 3,4-di-tert-butyl-PROXYLE ; le 2,2,6,6-tétraméthyl-1-pipéridinyloxylpyrrolidinyloxyle (TEMPO), le 4-benzoyloxy-TEMPO, le 4-méthoxy-TEMPO, le 4-chloro-TEMPO, le 4-hydroxy-TEMPO, le 4-oxo-TEMPO, le 4-amino-TEMPO, le 2,2,6,6-tétraéthyl-1-pipéridinyloxyle, le 2,2,6-triméthyl-6-éthyl-1-pipéridinyloxyle ; le N-tert-butyl-1-phényl-2-méthylpropylnitroxyde, le N-tert-butyl-1-(2-naphtyl)-2-méthylpropylnitroxyde, le N-tert-butyl-1-diéthylphosphono-2,2-diméthylpropylnitroxyde, le N-tert-butyl-1-dibenzylphosphono-2,2-diméthylpropylnitroxyde, le N-(1-phényl-2-méthylpropyl)-1-diéthylphosphono-1-méthyléthylnitroxyde, le di-tert-butylnitroxyde, le diphénylnitroxyde, le tert-butyl-tert-amylnitroxyde.

13. Procédé selon la revendication 11, **caractérisé en ce que** la polymérisation contrôlée est une variante de la polymérisation RAFT.

14. Procédé selon la revendication 13, **caractérisé en ce qu'**on utilise les composés thio THI 1 et THI 2 ou le thioester THE

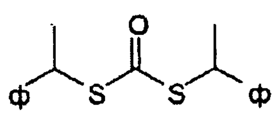

(THI 1)

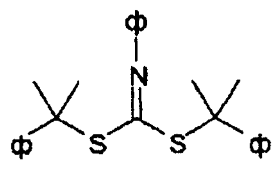

(THI 2)

$R^{\$1}$-C(S)-S-$R^{\$2}$ (THE)

où ϕ représente un groupe phényle, non fonctionnalisé ou fonctionnalisé avec des substituants alkyle ou aryle qui sont liés directement ou via des ponts ester ou éther, un groupe cyano ou un radical saturé ou aliphatiquement insaturé et où $R^{\$1}$ et $R^{\$2}$ sont choisis, indépendamment l'un de l'autre et $R^{\$1}$ peut être un radical d'un des groupes suivants i) à iv) et $R^{\$2}$ peut être un radical d'un des groupes suivants i) à iii) :

i) $C_1$-$C_{18}$-alkyle, $C_2$-$C_{18}$-alcényle, $C_2$-$C_{18}$-alcynyle, à chaque fois linéaire ou ramifié ; aryle, phényle, benzyle, hétérocycles aliphatiques et aromatiques,
ii) -$NH_2$, -NH-$R^{\$3}$, -$NR^{\$3}R^{\$4}$, -NH-C(O)-$R^{\$3}$, -$NR^{\$3}$-C(O)-$R^{\$4}$, -NH-C(S)-$R^{\$3}$, -$NR^{\$3}$-C(S)-$R^{\$4}$,

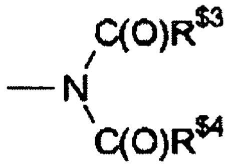 , 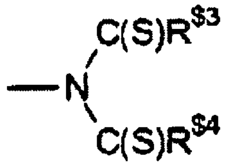 , 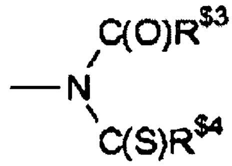

où $R^{\$3}$ et $R^{\$4}$ sont des radicaux choisis indépendamment l'un de l'autre du groupe i),
iii) -S-$R^{\$5}$, -S-C(S)-$R^{\$5}$, où $R^{\$5}$ peut être un radical d'un des groupes i) ou ii),
iv) -O-$R^{\$6}$, -O-C(O)-$R^{\$6}$, où $R^{\$6}$ peut être un radical d'un des groupes i) ou ii).

**15.** Procédé selon la revendication 11, **caractérisé en ce que** la polymérisation contrôlée est une variante de la polymérisation ATRP.

**16.** Procédé selon la revendication 11, **caractérisé en ce qu'**on utilise pour la stabilisation des radicaux des nitroxydes liés à un polymère ou non liés à un polymère du type (NIT 1) ou (NIT 2) :

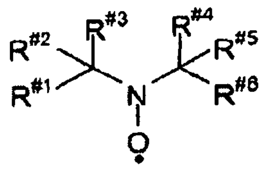

(NIT 1)

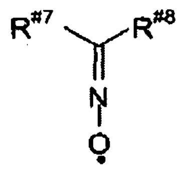

(NIT 2)

où $R^{\#1}$, $R^{\#2}$, $R^{\#3}$, $R^{\#4}$, $R^{\#5}$, $R^{\#6}$, $R^{\#7}$, $R^{\#8}$ peuvent signifier, indépendamment l'un de l'autre, les groupes suivants :

i) halogénures,
ii) hydrocarbures linéaires, ramifiés, cycliques et hétérocycliques comprenant 1 à 20 atomes de carbone qui peuvent être saturés, insaturés ou aromatiques
iii) -$COOR^{\#9}$, -$OR^{\#10}$ et -$PO(OR^{\#11})_2$, où $R^{\#9}$, $R^{\#10}$ et $R^{\#11}$ représentent des radicaux du groupe ii).

**17.** Procédé selon l'une quelconque des revendications précédentes, **caractérisé en ce qu'**on ajoute comme réticulant des chélates métalliques, des isocyanates, des amines, des alcools et/ou des époxydes.

**18.** Procédé selon l'une quelconque des revendications précédentes, **caractérisé en ce que** les polymères sont réticulés par un rayonnement actinique.

**19.** Procédé selon l'une quelconque des revendications précédentes, **caractérisé en ce que** les polymères sont réticulés par un rayonnement UV.

**20.** Procédé selon l'une quelconque des revendications précédentes, **caractérisé en ce qu'**il s'agit, pour les plaques d'imprimerie, de plaques d'imprimerie à base de photopolymères à plusieurs couches.

Fig. 1

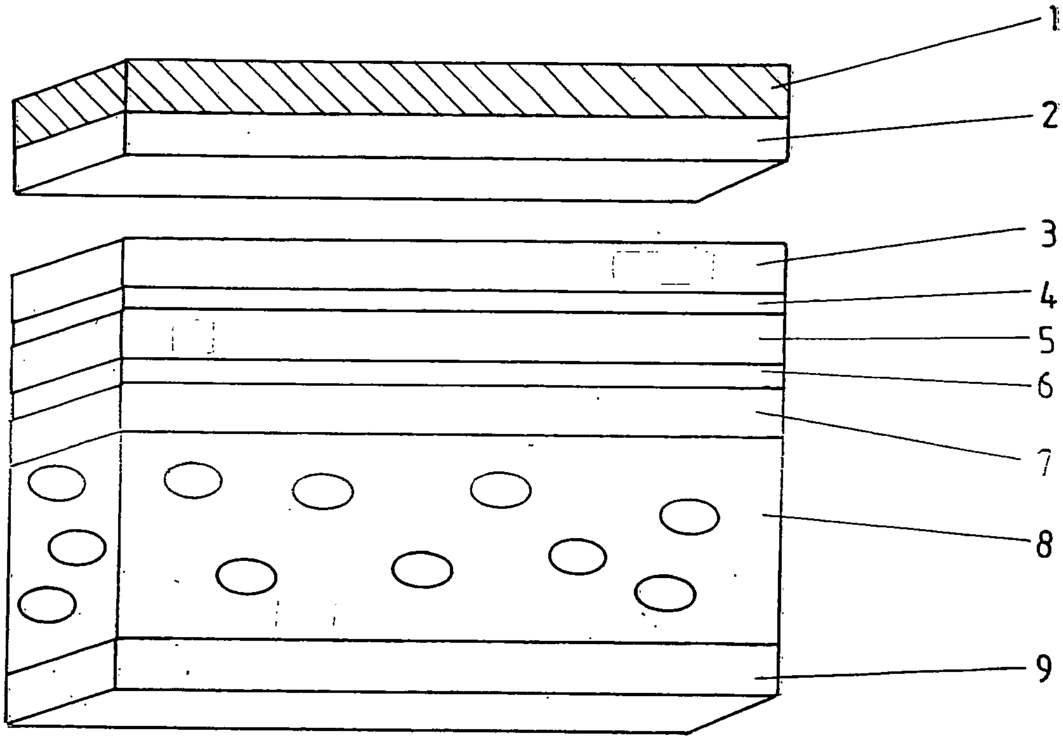

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 4380956 A
- GB 1533431 A
- US 4574697 A
- EP 0206760 A
- US 4574712 A
- US 3983287 A
- US 5613942 A
- US 5476712 A
- US 5708109 A
- EP 1188802 A
- EP 655490 A
- EP 1302521 A
- WO 2004050784 A
- DE 4340297 A1
- US 4581429 A
- WO 9813392 A1
- EP 735052 A1
- WO 9624620 A1
- WO 9844008 A1
- DE 19949352 A1
- EP 0824111 A1
- EP 826698 A1
- EP 824110 A1
- EP 841346 A1
- EP 850957 A1
- US 5945491 A
- US 5854364 A
- US 5789487 A
- WO 9801478 A1
- WO 9931144 A1


### In der Beschreibung aufgeführte Nicht-Patentliteratur


- **T.G. FOX.** *Bull. Am. Phys. Soc.,* 1956, vol. 1, 123
- **HOUBEN WEYL.** *Methoden der Organischen Chemie,* vol. E 19a, 60-147
- **VAN DRUMPT ; OOSTERWIJK.** Journal of Polymer Science, Polymer Chemistry. 1976, vol. 14, 1495-1511
- **HAWKER.** Beitrag zur Hauptversammlung. American Chemical Society, 1997
- **HUSEMANN.** *Beitrag zum IUPAC World-Polymer Meeting,* 1998
- **FOUASSIER.** Photoinititation, Photopolymerization and Photocuring: Fundamentals and Applications. Hanser-Verlag, 1995
- **CARROY et al.** Chemistry and Technology of UV and EB Formulation for Coatings, Inks and Paints. SITA, 1994
- **SKELHORNE.** Electron Beam Processing, in Chemistry and Technology of UV and EB formulation for Coatings, Inks and Paints. SITA, 1991, vol. 1